# EUROPÄISCHE PATENTSCHRIFT

(11) **EP 3 526 284 B1**
(45) Veröffentlichungstag und Bekanntmachung des Hinweises auf die Patenterteilung: **28.07.2021**
(21) Anmeldenummer: 17781394.6
(22) Anmeldetag: 16.10.2017
(51) Int. Cl.: C08K 5/092, C08L 77/00, C08J 3/22

(54) **ADDITIV ZUR KONTROLLIERTEN VISKOSITÄTSEINSTELLUNG VON POLYMEREN**
ADDITIVE FOR THE CONTROLLED ADJUSTMENT OF THE VISCOSITY OF POLYMERS
ADDITIF PERMETTANT D'AJUSTER DE MANIÈRE CONTRÔLÉE LA VISCOSITÉ DE POLYMÈRES

(30) Priorität: 17.10.2016 EP 16002226
(43) Veröffentlichungstag der Anmeldung: 21.08.2019
(73) Patentinhaber: L. Brüggemann GmbH & Co. KG, 74076 Heilbronn (DE)
(72) Erfinder: BERGMANN, Klaus, 74076 Heilbronn (DE)
(74) Vertreter: Grünecker Patent- und Rechtsanwälte PartG mbB
(86) Internationale Anmeldenummer: PCT/EP2017/001218
(87) Internationale Veröffentlichungsnummer: WO 2018/072875

(56) Entgegenhaltungen:
- EP-A1- 3 018 166
- EP-A2- 0 576 950
- WO-A1-01/21712
- WO-A1-2013/017140
- US-A1- 2010 247 825
- US-A1- 2015 126 652
- EICHHORN K-J- ET AL: "CHARACTERIZATION OF LOW MOLECULAR WEIGHT CARBOXYL-TERMINATED POLYAMIDES OBTAINED BY REACTIVE EXTRUSION OF POLYAMIDE 6 WITH TRIMELLITIC ANHYDRIDE", JOURNAL OF APPLIED POLYMER SCIENCE, JOHN WILEY & SONS, INC, US, Bd. 62, Nr. 12, 19. Dezember 1996 (1996-12-19), Seiten 2053-2060, XP000637743, ISSN: 0021-8995, DOI: 10.1002/(SICI)1097-4628(19961219)62:12<205 3::AID-APP8>3.0.CO;2-G in der Anmeldung erwähnt

## Beschreibung

Die vorliegende Erfindung betrifft ein Additiv zur kontrollierten Viskositätseinstellung von Polymeren, die mit Säure spaltbare Einheiten aufweisen, insbesondere von Polykondensaten, wie Polyamiden, Polyestern, Polycarbonaten und Polyethern sowie deren Copolymeren, ein Verfahren zum Herstellen des Additivs, ein Verfahren zur kontrollierten Viskositätseinstellung von Polymeren, die mit Säure spaltbare Einheiten aufweisen, insbesondere von Polykondensaten, wie Polyamiden, Polyestern, Polycarbonaten und Polyethern sowie deren Copolymeren und die Verwendung des Additivs zur kontrollierten Viskositätseinstellung von Polymeren, die mit Säure spaltbare Einheiten aufweisen, insbesondere von Polykondensaten, wie Polyamiden, Polyestern, Polycarbonaten und Polyethern sowie deren Copolymeren.

### Hintergrund der Erfindung

Polyamide sind Kunststoffe, die einen breiten Einsatzbereich aufweisen. Aus Polyamiden oder Polyamidcompounds hergestellte Formteile werden üblicherweise mittels Spritzgussverfahren oder Extrusionsverfahren hergestellt. Beim Spritzgießen wird der Kunststoff aus einem Plastifiziergerät, das den Kunststoff auf Schmelztemperatur erwärmt, in ein Formwerkzeug gespritzt, in welchem er erst verdichtet wird und dann erkaltet. Beim Extrudieren gelangt der Kunststoff durch eine Dosiervorrichtung in einen beheizten Zylinder, wird aufgeschmolzen, homogenisiert und verdichtet, um dann mittels einer Schnecke durch eine Düse gepresst zu werden. Diese Anlage wird Extruder genannt. Extruder werden zur Fertigung von Profilen, Rohren, Platten, Textilfasern, Behältern und Masterbatches verwendet.

Polyamide, die in Spritzgussverfahren verarbeitet werden, sollten einen höheren Schmelzindex (MFI) aufweisen als Polyamide, die als thermoplastische Extrusionsmassen Einsatz finden. Extrusionsmassen haben üblicherweise eine höhere Molekülmasse und damit eine höhere Schmelzviskosität bzw. einen niedrigeren Schmelzindex, verglichen mit Spritzgussmassen aus den gleichen Werkstoffen. Höhere Schmelzviskositäten bzw. niedrigere Schmelzindices ermöglichen unter anderem ein besseres Stehvermögen nach dem Austritt aus der Düse beim Extrudieren. Höhere Molmasse, höhere Schmelzviskosität bzw. verringerter Schmelzindex ist außerdem typischerweise mit verbesserten mechanischen Werten verbunden. Die Verarbeitung im Spritzguss ist jedoch schwieriger. Üblicherweise werden daher zur Verbesserung der Verarbeitbarkeit im Spritzguss in der Praxis Gleitmittel / Prozesshilfsmittel zugegeben, um eine ausreichendes Eigenschaftsbild im Spritzguss zu ermöglichen. Zu den am häufigsten eingesetzten Prozesshilfsmitteln in Polyamiden gehören Metallstearate, Amidwachse, Fettsäureester langkettiger Alkohole und Montanwachse (Montansäure, deren Ester und Metallsalze), die je nach Anforderungsprofil eingesetzt werden. Insbesondere bei verstärkten Polyamiden müssen in diesem Zusammenhang vor allem bei höheren Füllstoffgehalten (z.B. 30 bis 60%) sehr hohe Konzentrationen an diesen Gleitmitteln eingesetzt werden, um eine gute Verarbeitbarkeit sowohl während des Compoundierschritts als auch beim Spritzgießen zu ermöglichen. Von Nachteil sind dabei insbesondere Ausblühungen auf der Oberfläche von Formteilen, signifikante Beeinträchtigung der mechanischen Eigenschaften sowie erhöhte Additivkosten.

Ähnliche Aufgaben und Probleme bestehen für die Anwender auch bei anderen Polykondensaten, wie Polyestern, Polycarbonaten und Polyethern. Insbesondere bei Polyestern stehen den Anwendern nur relativ schmale Verarbeitungsfenster zur Verfügung, die eine genaue Prozesskontrolle erfordern und ebenfalls eine genaue Kontrollle der Produktqualität des Ausgangsmaterials.

Polykondensate, wie Polyamide und die anderen hier genannten Polymere, wie insbesondere auch Polyester, werden durch Zusatz von Säuren oder Säureanhydriden bei hohen Temperaturen in der Schmelze schnell und stark abgebaut. Dieses Prinzip wird für das chemische Recycling von Polyamid 6 eingesetzt. (E. Meusel, E. Seifert, E. Taeger, Chemisches Recycling von Polyamideinlagevliesstoffabfällen, Gummi Fasern Kunststoffe 1998, 51(2) Seiten 126 bis 130). Dieser Artikel beschreibt, dass Polyamid in der Schmelze unter anderem mit Dicarbonsäuren partiell zu Oligo- bzw. Polyamiddicarbonsäuren abgebaut werden kann. Durch das Mischungsverhältnis der Komponenten wird der Abbaugrad bestimmt. Dabei greift die aliphatische Dicarbonsäure zunächst an den stärker basischen Aminoendgruppen an, zudem erfolgt die Spaltung der Molekülketten. Die Spaltung unterliegt statistischen Regeln und somit entstehen Bruchstücke unterschiedlicher Kettenlänge. Die Spaltprodukte können anschließend mit aliphatischen Diaminen zu Produkten umgesetzt werden, die aufgrund ihres Schmelzverhaltens und ihrer viskoelastischen Eigenschaften gute Schmelzkleber sind.

Polyamide mit niedrigeren Kettenlängen weisen eine bessere Fließfähigkeit auf. Eine hohe Fließfähigkeit bzw. eine niedrige Schmelzviskosität ist eine erstrebenswerte Eigenschaft für Spritzgussanwendungen.

Der Kettenabbau durch Säuren ist allerdings aufgrund der hohen Reaktionsgeschwindigkeiten in der Schmelze schwer zu kontrollieren und führt zu einer deutlichen Verschlechterung der mechanischen Eigenschaften. Die Kontrolle derartiger Reaktionen wird darüber hinaus schwieriger, wenn Polyamidausgangsprodukte eingesetzt werden, die eine nicht genau spezifizierte Zusammensetzung und/oder Startviskosität aufweisen, beispielsweise bei gemischten Produktionsabfällen und/oder Materialien zum Recycling. Derartige Materialien werden daher nicht für die Produktion hochwertiger Produkte eingesetzt, da eine gezielte Viskositätseinstellung aufwändige Voruntersuchungen und Testläufe erforderlich machen würde.

Die Druckschrift WO-A-01/21712 betrifft Polyamidzusammensetzungen, in die organische Säuren eingearbeitet sind, um die Viskosität abzusenken, ohne aber die Zähigkeit signifikant zu reduzieren. Insbesondere beschreibt die WO-A-01/21712 verstärkte Polyamidzusammensetzungen, umfassend 40 bis 94 Gew.-% Polyamid, 6 bis 60 Gew.-% eines Verstärkers, ausgewählt aus der Gruppe bestehend aus Kautschuk und ionischen Copolymeren und bis zu 10 Gew.-% einer organischen Säure. Zur Herstellung werden Polyamid, Verstärker und organische Säuren in einem Schritt in der Schmelze miteinander vermischt oder ein Gemisch aus Polyamid und Verstärker wird in der Schmelze mit der Säure gemischt oder Polyamid und Verstärker werden vermischt und anschließend in der Schmelze mit der Säure vermischt. Man erhält ein verstärktes Polyamid mit erhöhter Fließfähigkeit und erniedrigter Schmelzviskosität, ohne die Zähigkeit negativ zu beeinflussen.

Die US 2015/0126652 A1 offenbart eine Konzentratzusammensetzung zur Kettenverlängerung von Polyamiden. Die EP 3 018 166 A1 offenbart ein Konzentrat zur Kettenverlängerunng von Polyestern. Die WO 2013/017140 A1 offenbart eine Bindemittelzusammensetzung zur Herstellung von Formteilen. Die EP 0 576 950 A2 offenbart thermoplastische Formmassen. Die US 2010/0247825 A1 offenbart eine thermoplastische Polyolefinzusammensetzung.

Allerdings ist der Kettenabbau durch Säuren aufgrund der hohen Reaktionsgeschwindigkeiten in der Schmelze schwer zu kontrollieren und kann daher eine Verschlechterung der mechanischen Eigenschaften nach sich ziehen. Ferner betrifft die WO-A-01/21712 kautschukverstärkte Polyamide. Dabei ist es notwendig, dass der Kautschuk eine funktionelle Gruppe enthält, die mit den Endgruppen des Polyamids reagieren kann. Des Weiteren ist es notwendig, dass die Schmelzviskositäten des Kautschuks und des Polyamids ähnlich sind, um eine gute Dispersion zu erhalten.

D. Lehmann, Polymers-Opportunities and Risks II: Sustainability, Product Design and Processing 2010, 12, 163-192 beschreibt die Schmelzmodifizierung von Polyamiden zu Oligoamiden. Es werden Abbaureaktionen in der Schmelze beschrieben. Der Abbau erfolgt erneut durch Zugabe von Carbonsäuren oder Carbonsäureanhydriden. Nach dem Zusatz der Abbauverbindung in eine Polyamidschmelze bei einer Temperatur über 230°C kann ein schneller Abfall der Schmelzviskosität nach kurzer Zeit beobachtet werden. Dabei werden Oligoamide mit definiertem Molekulargewicht und einer engen Molekulargewichtsverteilung erhalten.

K.-J. Eichhorn, D. Lehmann, D. Voigt, Journal of Applied Polymer Science 1996, Vol. 62, Seiten 2053-2060, beschreiben, dass lange Polymerketten während eines Extrusionsprozesses sehr schnell zu niedrigmolekularen funktionalisierten Polymeren und Oligomeren abgebaut werden können. Die Untersuchungen wurden mit PA6 und Trimellitsäureanhydrid durchgeführt. Es wurden zwei unterschiedliche Reaktionsmechanismen beobachtet. Der Erste war eine Reaktion des Anhydrids mit Aminoendgruppen von PA6, der Zweite eine Reaktion des Anhydrids mit Amidgruppen von PA6 unter Kettenspaltung. Allerdings wurde bei dieser Reaktion ein Gemisch aus verschiedensten unterschiedlichen Abbau- und Reaktionsprodukten erhalten.

Die im Markt erhältlichen unverstärkten Polyamide mit guten Fließeigenschaften werden im Wesentlichen durch chemische Modifizierung während der Polymerisation in Batch-Verfahren in vergleichsweise kleinen Mengen hergestellt. Die große Masse der Polyamide, die durch kontinuierliche hydrolytische Polymerisation produziert werden, können bislang diese Fließeigenschaften nicht ohne weiteres erreichen.

Für unverstärkte Polyamide sind bislang keine wirklich effizienten Fließverbesserer bekannt. Die bekannten Mittel verbessern lediglich die Fließeigenschaften von gefüllten Polyamiden (häufig durch die Modifikation der Oberfläche der Füllstoffe beispielsweise mit Kopplungsagentien, um so eine Fließverbesserung zu erzielen), sind aber in unverstärkten Polyamiden wenig bis gar nicht wirksam.

### Aufgabe der Erfindung

Die Aufgabe der vorliegenden Erfindung ist es, die oben genannten Probleme des Standes der Technik zu lösen und ein Additiv zur Verfügung zu stellen, mit dem eine kontrollierte niedrigere Viskositätseinstellung bzw. eine positive Beeinflussung der Fließeigenschaften, insbesondere eine Verlängerung der Fließspirale möglich ist, um so die Fließfähigkeit von Polykondensaten, insbesondere von unverstärktem und verstärktem Polyamid und Polyester bei gleichzeitigem Erhalt der mechanischen Kennwerte, wie Zugfestigkeit, Biegefestigkeit, Schlagzähigkeit und Reißdehnung, zu verbessern. Eine weitere Aufgabe der vorliegenden Erfindung ist es, auch bei nicht spezifikationsgerechten hochmolekularen Polykondensaten (Polyester, Polyamide etc.) die Fließfähigkeit effektiv und reproduzierbar für den Einsatz in hochwertigen Spritzgussanwendungen mit sehr gutem mechanischem Eigenschaftsprofil einzustellen und diese damit aufzubereiten. Weiterhin ist eine Aufgabe der vorliegenden Erfindung, auch bei hochmolekularen Polykondensaten (Polyester, Polyamide etc.) aus Abfällen die Fließfähigkeit effektiv und reproduzierbar für den Einsatz in hochwertigen Spritzgussanwendungen einzustellen und diese damit aufzubereiten. Die erwähnten Abfälle können aus der Produktion, aus der Verarbeitung von Polyamidwerkstoffen und aus der Wiederverwertung entsprechender Verbrauchsmaterialien stammen. Weiterhin können die Abfälle aus der Herstellung, Verarbeitung und Nachbearbeitung von Gusspolyamid 6 stammen. Ferner ist es eine Aufgabe der vorliegenden Erfindung nicht nur von sortenreinen hochmolekularen Polykondensaten (Polyester, Polyamide etc.) sondern auch von Mischungen hochmolekularer Polykondensate (Polyester, Polyamide etc.) die Fließfähigkeit effektiv und reproduzierbar für den Einsatz in hochwertigen Spritzgussanwendungen einzustellen und diese damit aufzubereiten.

### Kurze Beschreibung der Erfindung

Diese Aufgaben werden gelöst durch die Verwendung, ein Additiv und ein Verfahren, wie in den Ansprüchen definiert.

Bevorzugte Ausführungsformen sind in den Unteransprüchen dargestellt.

### Beschreibung der Figuren

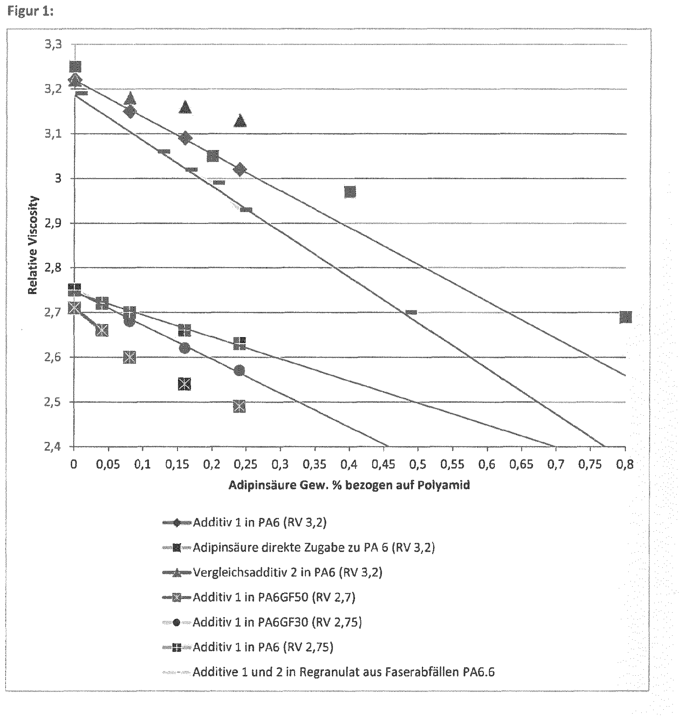

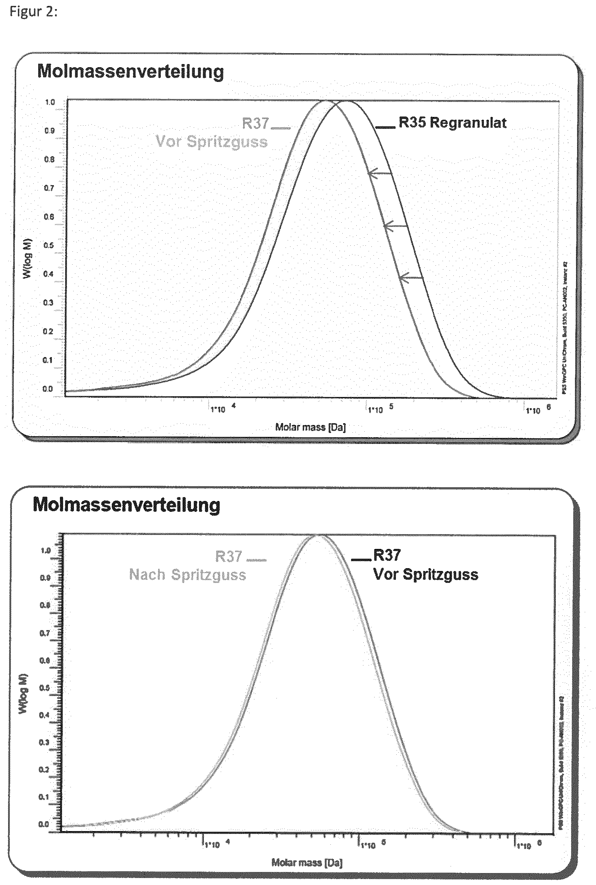

Figur 1 zeigt die Änderungen der relativen Viskositäten verschiedener Polyamide bei Zusatz von Adipinsäure, sowohl mit dem erfindungsgemäß einsetzbaren Additiv als auch mit Vergleichsadditiven sowie bei direkter Zugabe. Figur 2 zeigt GPC-Spektren von Materialien des Beispiels 4.

### Detaillierte Beschreibung der Erfindung

Überraschenderweise konnte die Aufgabe der vorliegenden Erfindung gelöst werden, indem mindestens eine bei Polymeren, die mit Säure spaltbare Einheiten aufweisen, insbesondere von Polykondensaten, wie Polyamiden, Polyestern, Polycarbonaten und Polyethern sowie deren Copolymeren, kettenspaltend wirkende Säure oder ein Säureanhydrid in einem ersten Schritt in einen Träger, vorzugsweise polymeren Träger, mit dem diese Säure bzw. das Säureanhydrid nicht bzw. nur unwesentlich reagiert, in der Schmelze eingebracht wird und in dem polymeren Träger gleichmäßig verteilt wird. Dieses Additiv, umfassend die sehr gut verteilte Säure (bzw. Säureanhydrid) im Träger, kann anschließend dem zu modifizierenden Polymer in der Schmelze zugemischt werden.

Durch die Vorvermischung der Säure bzw. des Säureanhydrids in einem Träger, vorzugsweise einem polymeren Träger wird unerwarteterweise erreicht, dass in der nachfolgenden Verarbeitung mit der Polykondensatschmelze die Schmelzkomponenten sehr intensiv und gleichförmig homogen in enger Verweilzeitverteilung vermischt und zur Reaktion gebracht werden können. Dadurch werden unerwarteterweise Polykondensate, insbesondere Polyamide und Polyester mit gezielt gekürzten Ketten mit definierter enger Molekulargewichtsverteilung erhalten. Es wird davon ausgegangen, dass durch diese gezielte Kettenkürzung die Viskosität der Polymere, bevorzugt der Polyamide und Polyester, kontrolliert und wie gewünscht auf den Punkt genau eingestellt werden kann.

Die vorliegende Erfindung zeigt dabei eine erstaunliche Eignung zur Einstellung der Fließfähigkeit/Viskosität, ohne dass dadurch andere Eigenschaften des Ausgangsmaterials nachteilig beeinträchtigt werden. In den erfindungsgemäßen Beispielen sowie in Figur 1 wird die genaue Einstellmöglichkeit der Zielviskosität durch die lineare Abhängigkeit zwischen Modifikation der Fließfähigkeit/Viskosität und Einsatzmenge an Additiv gezeigt. Darüber hinaus, wie insbesondere in Figur 2 offenbart, ermöglicht das erfindungsgemäß einsetzbare Additiv eine Änderung der Fließfähigkeit/Viskosität, ohne dabei nachteilig die Breite oder Modalität der Molmassenverteilung und den PDI (Polydispersitätsindex) des Ausgangsmaterials zu verändern. Zur Charakterisierung von Polymeren werden gemittelte Werte als Molekülmasse angegeben. Gebräuchlich sind die zahlenmittlere molare Masse (Mn) und die gewichtsmittlere molare Masse (Mw). Ein Maß für die Breite der Molmassenverteilung ist die Polydispersität (PDI). Die Polydispersität ist definiert als Quotient aus Mw und Mn (PDI = Mw/Mn). Die zahlenmittleren Molmassen Mn und die gewichtsmittleren Molmassen Mw lassen sich mittels Gelpermeationschromatographie (GPC) ermitteln. Insbesondere findet weder eine Aufspaltung, noch eine Verbreiterung der Molmassenverteilung mit einhergehender Erhöhung des PDI statt, noch werden größere Mengen an niedermolekularem Material geformt. Dies ist durch den Vergleich der Molmassenverteilungen für die Proben R35 und R37 (nach Compoundierung, in der Figur 2 "R37 vor Spritzguss" genannt) dargestellt, wo im Wesentlichen eine Parallelverschiebung der Molmassenverteilungskurve zu sehen ist. Darüber hinaus führt der Einsatz des erfindungsgemäß einsetzbaren Additivs auch bei nachfolgenden Spritzgussanwendungen nicht zu einer weiteren wesentlichen Veränderung des Materials. Dies wird durch die beiden Molmassenverteilungskurven R37 (nach Compoundierung, in der Figur 2 "R37 vor Spritzguss" genannt) und R37 (nach Spritzguss) verdeutlicht, wo keine merkliche Veränderung des Materials mehr auftritt. Dies ist insbesondere für den Spritzguss-Anwender ein wichtiges Merkmal, da durch die Parameter des Ausgangsmaterials (nach Compoundierung) die Parameter des Fertigprodukts festgelegt sind.

Nachfolgend werden weitere Vorteile und Aspekte der vorliegenden Erfindung beschrieben. Soweit diese Beschreibung unter Verweis auf Polyamide vorliegt, wird der Fachmann verstehen, dass diese Ausführungsformen auch auf weitere, hier bereits beschriebene Polymere, die mit Säure spaltbare Einheiten aufweisen, insbesondere Polykondensate, wie Polyamide, Polyester, Polycarbonate und Polyether sowie deren Copolymere, Anwendung finden können. Die Beschreibung der bevorzugten Ausführungsformen unter Verweis auf Polyamide dient lediglich der Lesbarkeit und Vereinfachung der Beschreibung. Alle beschriebenen Ausführungsformen beziehen sich aber auch auf die weiteren, hier genannten Polymere und sind für diese offenbart.

Überraschenderweise zeigt das erfindungsgemäß einsetzbare Additiv folgende weitere Vorteile:
- Durch die bessere Fließfähigkeit des Polyamids kann im Spritzgussverfahren eine Reduktion der Zykluszeiten und damit eine Verbesserung der Produktivität erreicht werden. Durch die bessere Fließfähigkeit lässt sich auch die Temperatur beim Spritzgießen senken, wodurch der Energieverbrauch gesenkt wird sowie Nachdruck- und Kühlzeit reduziert werden. Alternativ kann natürlich die Temperatur unverändert bleiben, so dass sich durch die verbesserten Fließeigenschaften kürzere Zykluszeiten realisieren lassen. Typischerweise wird ein Spritzguß-Anwender beispielsweise aber die Vorteile der vorliegenden Erfindung dahingehend nutzen, dass die Verarbeitungstemperatur verringert wird, da damit das Material weniger thermisch beim Spritzguß beansprucht wird. Durch das bessere Fließverhalten lassen sich darüber hinaus auch komplexere und / oder dünnwandigere Produkte erstellen, da insbesondere lange Fließwege, komplexe Geometrien und die Füllung dünnwandiger Bereiche problemlos möglich sind. Somit erweitert sich das Einsatzgebiet der erfindungsgemäßen modifizierten Polyamide, insbesondere auch von mit Glasfasern oder anderen Füllstoffen und Verstärkungsmaterialien gefüllten Polyamiden, so dass weitere bislang aus Metall bestehende Bauteile nunmehr durch erfindungsgemäß modifizierte Polyamide ersetzt werden können.
- Die Erfindung eröffnet die Möglichkeit, auf üblicherweise verwendete Gleitmittel ganz zu verzichten. Diese können in vielen Fällen nachteilige Effekte und Probleme verursachen, da sie als Fremdkomponenten in Polyamiden an die Oberfläche migrieren. Dadurch können beispielsweise die Lackierbarkeit oder die Bedruckbarkeit beeinträchtigt werden. Weiterhin können sich Formbeläge auf Werkzeugoberflächen bilden, die aufwendig entfernt werden müssen.
- Durch die gezielte Kombination bekannter Gleitmittel und/oder Entformungsmittel mit erfindungsgemäß einsetzbaren Additiven ist eine noch weitergehende Verbesserung der Verarbeitungs- und Fließeigenschaften erreichbar.
- Das Prinzip kann zur Herstellung von Verbundwerkstoffen (Kompositwerkstoffen) Anwendungen finden. Bei diesen besteht oft das Problem der hohen Schmelzeviskosität mit entsprechend einhergehender geringer Fließfähigkeit der Polymerschmelze, so dass die Fasermatten nicht entsprechend infiltriert und durchdrungen werden können bzw. die eingeschränkte Fließfähigkeit nur die Herstellung kleiner Verbundbauteile erlaubt.
- Es wird die Chance eröffnet, Bauteile mit geringeren Wanddicken im Vergleich zu gegenwärtigen Pendants bei vergleichbaren mechanischen Eigenschaften herzustellen. Durch die dünnere Wanddicke wird eine Gewichtseinsparung im Rahmen von Leichtbaukonzepten erreicht. Es werden neue Bauformen mit längeren und/oder komplexeren Fließgeometrien ermöglicht.
- Dank der verbesserten Fließfähigkeit können Mehrkavitätenwerkzeuge verwendet werden, was zu höheren Fertigungsraten und entsprechenden Kostensenkungen führen kann. Da die erfindungsgemäß hergestellten Polyamide einen geringeren Einspritzdruck erfordern, können auch kleinere Spritzgießmaschinen zum Einsatz kommen, die günstiger in der Anschaffung und im Betrieb sind.
- Hochviskose Polyamidabfälle (z.B. von Verpackungsfolien oder Extrusionsanwendungen) aus Produktionsabfällen oder aus gebrauchten Materialien können in schnell fließende Spritzgussqualitäten umgearbeitet werden, die hinsichtlich Fließfähigkeit der Schmelze und betr. ihrer mechanischen Eigenschaften die gleiche Qualität ermöglichen wie mit Neuware. Dies gilt insbesondere auch für hochviskose Polyesterabfälle, z.B. aus PET, die bei der Flaschenherstellung bzw. beim Recycling von PET Flaschen anfallen.
- Hochviskose Gusspolyamid-Abfälle können unter Verwendung der erfindungsgemäß einsetzbaren Additive zu hochwertigen PA6-Spritzgusstypen und -Extrusionstypen aufbereitet werden. In diesem Bereich besteht ein großer wirtschaftlicher Bedarf, da bei der Verarbeitung von Gusspolyamid 6 bereits bei der Herstellung von Halbzeugen (z.B. durch Angüsse und Verteilersysteme) Abfallmengen in Höhe von bis zu 10 % bezogen auf die Polyamidmasse anfallen können. Zusätzlich fallen durch spanende Nachbearbeitung und Schwankungen in der Produktion weitere Abfallmengen an, so dass in Summe bis zu 30 % des für ein Bauteil eingesetzten Polyamidwerkstoffs als Abfall anfallen können. Alleine innerhalb der EU entspricht dies einem Abfallvolumen von schätzungsweise 5000 Tonnen/Jahr.
- Das erfindungsgemäß einsetzbare Additiv zeigt auch bei unverstärkten Polyamiden eine gute und kontrollierbare Aktivität, so dass auch bei unverstärkten Polyamiden eine kontrollierte Viskositätseinstellung und gleichzeitig eine deutlich erhöhte Fließfähigkeit erreicht werden kann, ohne dass dabei die mechanischen Eigenschaften negativ beeinflusst werden.
- Durch den Einsatz des Trägermaterials, insbesondere eines polymeren Trägermaterials wird auch eine mögliche korrosive Wirkung der Säuren oder Anhydride auf die Stahlelemente der verwendeten Apparate zur Mischung in der Schmelze deutlich reduziert im Vergleich zur direkten Einmischung einer Säure in ein Polyamid.

Erfindungsgemäß wird unter den Begriff "gleichmäßig verteilt" verstanden, dass die Säure bzw. das Säureanhydrid in dem Träger, vorzugsweise dem polymeren Träger so verteilt ist, dass die Konzentration in allen Teilen des Trägers, vorzugsweise des polymeren Trägers im Wesentlichen gleich ist, d.h. dass keine Stellen im Träger vorliegen, die eine deutlich höhere Konzentration an Additiv aufweisen als andere Stellen. Der Begriff "homogen verteilt" kann gleichbedeutend verwendet werden.

Als Träger kommen grundsätzlich alle Stoffe (oder Gemische von Stoffen), vorzugsweise Polymere, in Frage, die mit der Säure oder dem Säureanhydrid bei einer Temperatur in der Schmelze gemischt werden können, bei der sowohl die Säure oder das Säureanhydrid als auch der Träger stabil sind, d.h. weder zerfallen, noch miteinander reagieren, noch flüchtige Bestandteile enthalten oder bilden und zudem möglichst nicht verfärben. Dabei sollten Säure (bzw. Säureanhydrid) und Träger so gewählt werden, dass entweder Säure (bzw. Säureanhydrid) und Träger beide im geschmolzenen Zustand gemischt werden oder dass die Säure (bzw. das Säureanhydrid) sich vollständig im geschmolzenen Träger lösen lässt. So kann eine homogene Mischung der Säure oder des Säureanhydrids im Träger durch Mischen in der Schmelze erreicht werden.

In einer bevorzugten Ausführungsform in Verbindung mit einer der oben oder unten genannten Ausführungsformen ist der Träger ein polymerer Träger mit dem das zu modifizierenden Polyamid verträglich und sehr gut mischbar ist. Ferner ist der polymere Träger vorzugsweise bei den für Polyamide typischen Verarbeitungstemperaturen thermisch stabil, enthält oder bildet möglichst wenige flüchtige Bestandteile und verfärbt nicht während der Verarbeitung. In einer weiteren Ausführungsform enthält der Träger reaktive Gruppen, die mit dem Polyamid in ähnlicher Weise reagieren können, wie die enthaltene homogen verteilte Carbonsäure. Dabei kann es sich z.B. um Maleinsäureanhydrid oder Glicydyl Methacrylate enthaltende Copolymere mit Olefinen handeln. Beispiele hierfür sind Ethylen-Ethylacrylat-Glycidylmethacrylat Terpolymer (E-EA-GMA), Ethylen-Butylacrylat-Glycidylmethacrylat Terpolymer (E-BA-GMA), Ethylen-Vinylacetat-Copolymer funktionalisiert mit Maleinsäureanhydrid (E-VA-MA), Styrol-Ethylen-Butylen-Styrol Copolymer funktionalisiert mit Maleinsäureanhydrid (SEBS-MA). Diese polymeren Träger mit reaktiven Gruppen werden bevorzugt mit nicht-reaktiven polymeren Trägern (ohne reaktive Gruppen) in Kombination eingesetzt, wobei auf gute Mischbarkeit zu achten ist.

Vorzugsweise ist der polymere Träger ausgewählt aus einem Polymer oder Copolymer aus den Monomeren Ethylen, Polypropylen oder andere Olefine, Methacrylsäure, Vinylacetat, Acrylsäure, Acrylsäureester, oder Methacrylsäureester. Besonders bevorzugt ist der polymere Träger ein Olefin-Acrylsäureester-Copolymer oder ein Olefin-Methacrylsäureester-Copolymer, insbesondere ein Ethylen-Methylacrylat-Copolymer (EMA), ein Ethylen-Ethylacrylat-Copolymer (EEA) oder ein Ethylen-Butylacrylat-Copolymer (EBA). Wie bereits vorstehend angeführt, können auch nicht polymere Träger eingesetzt werden. Beispiele sind Gleitmittel wie primäre und sekundäre Fettsäureamidwachse, beispielsweise Ethylen-bis-stearamid (EBS), Erucamid und Stearamid, Metallseifen beispielsweise Metallstearate, Paraffinwachse, Polyolefin-wachse, Fischer-Tropsch Wachse, Fettsäureester des Pentaerythritols, polare synthetische Wachse (beispielsweise oxidierte Polyolefin-Wachse oder gepfropfte Polyolefin-Wachse) oder andere Wachse, sowie andere Stoffe, die auch als Zuschlagstoffe für Polyamide bekannt sind. Bevorzugt sind EBS, Erucamid, langkettige Ester des Pentaerythrits und oxidierte Polyolefinwachse.

In einer bevorzugten Ausführungsform weist der Träger, vorzugsweise polymere Träger, idealerweise einen Schmelzpunkt auf, der niedriger ist als der Schmelzpunkt des zu verarbeitenden Polyamids. Dies ermöglicht zum einen die schonende und energiesparende Einbringung der Säure bzw. des Anhydrids in den Träger bei der Herstellung des erfindungsgemäß einsetzbaren Additivs, weiterhin wird dadurch auch die Einbringung in das Polyamid vereinfacht. Insgesamt wird die thermische Belastung der Säure bzw. des Anhydrids sowie des Trägermaterials dadurch minimiert.

In Ausführungsformen kann der Träger auch mit einem oder mehreren weiteren Polymeren vermischt werden, die im Gegensatz zum erfindungsgemäß einzusetzenden Träger, der nicht bzw. nur unwesentlich mit der eingesetzten Säure bzw. dem Anhydrid reagiert, mit der enthaltenen Säurekomponente reagieren können. Der Anteil derartiger zusätzlicher (reaktiver) Polymere beträgt 50 Gew.-% oder weniger, insbesondere weniger als 30 Gew.-%, bezogen auf die Gesamtzusammensetzung des Additivs. Der Anteil darf auf jeden Fall nicht höher sein als der Anteil an nichtreaktivem Träger, bevorzugt beträgt er 50 Gew.-% oder weniger, stärker bevorzugt 40 Gew.-% oder weniger, und in Ausführungsformen 30 Gew.-% oder weniger, bezogen auf den Anteil an nichtreaktivem, vorzugsweise polymerem Träger. Geeignete Polymere für diese Ausführungsform können frei gewählt werden, ggf. unter Berücksichtigung des beabsichtigten Einsatzbereichs (des zu modifizierenden Polyamids). Insbesondere geeignet sind Polyamide, wie Polyamid 6 und Polyamid 6.6 sowie deren Mischungen, als auch Polyester, wie PET und PBT, sowie deren Mischungen, oder Mischungen aus Polyamiden und Polyestern. Durch den teilweisen Ersatz der nichtreaktiven Träger können Kosteneinsparungen realisiert werden und/oder die Mischbarkeit/Verarbeitbarkeit mit den zu modifizierenden Polyamiden verbessert werden. Untersuchungen mit Additiven mit einem Polyamidanteil haben überraschender Weise gezeigt, dass durch den Einsatz eines Polyamids im Additiv selbst die Schlagzähigkeit des Endprodukts verbessert werden kann. Soweit die vorliegende Erfindung das Additiv als solches beansprucht, ist das zusätzliche Polymer im Additiv wie in Anspruch 12 definiert.

In einer bevorzugten Ausführungsform in Verbindung mit einer der oben oder unten genannten Ausführungsformen ist die Säure und/oder das Säureanhydrid eine Carbonsäure bzw. ein Carbonsäureanhydrid, besonders bevorzugt eine mehrfunktionelle Carbonsäure, insbesondere eine bifunktionelle Carbonsäure. Zum Einsatz können Monocarbonsäuren, Dicarbonsäuren, Tricarbonsäuren, Tetracarbonsäuren etc. sowie auch Aminocarbonsäuren oder Gemische aus den vorgenannten kommen. Insbesondere ist die bifunktionelle Carbonsäure ausgewählt aus der Gruppe bestehend aus Adipinsäure, Pimelinsäure, Korksäure, Azelainsäure, Sebacinsäure, Undecandicarbonsäure, Dodecandicarbonsäure, Oxalsäure, Malonsäure, Bernsteinsäure, Glutarsäure, Oxalessigsäure, Phthalsäure, Terephthalsäue, Isophthalsäure, 2,6-Naphthalendicarbonsäure oder Gemischen daraus sowie Derivate dieser Dicarbonsäuren. Besonders bevorzugt sind Adipinsäure, Sebacinsäure und Terephthalsäure. Ein Beispiel eines besonders geeigneten Derivats einer der genannten Dicarbonsäuren sind Derivate der Bernsteinsäure, z.B. 2-(10Oxo-10H-9-oxa-10-phosphaphenantren-10-ylmethyl)bernsteinsäure.

Geeignet sind auch Polymere oder Oligomere die säureterminiert sind (d.h. Säureendgruppen aufweisen), wie Polyamide, Oligoamide und Polyester, insbesondere säureterminierte oligomere Amide. Geeignete säureterminierte Polymere sind insbesondere Polyamid 6, Polyamid 6.6, sowie PBT und PET und Mischungen aus den genannten Polymeren oder Mischungen aus den genannten Polymeren und den genannten Oligomeren. Derartige höhermolekulare Säuren, die erfindungsgemäß eingesetzt werden können, lassen sich typischerweise gut mit den Trägermaterialien vermischen und weisen auch, insbesondere die oligomeren Amide, eine gute Verträglichkeit und Mischbarkeit mit den zu modifizierenden Polyamiden auf.

In einer weiteren bevorzugten Ausführungsform in Verbindung mit einer der oben oder unten genannten Ausführungsform ist das Säureanhydrid ausgewählt aus Trimellitsäureanhydrid, Succinsäureanhydrid, Phthalsäureanhydrid, Pyromellitsäureanhydrid oder Gemischen daraus, besonders bevorzugt ist das Säureanhydrid Trimellitsäureanhydrid.

Beim Einsatz von Anhydriden hat sich gezeigt, dass es vorteilhaft ist, wenn darauf geachtet wird, dass im Reaktionssystem bei der Modifizierung von Polyamiden ein gewisser Anteil an Feuchtigkeit vorliegt.

Diese Feuchtigkeit kann gezielt mit dem erfindungsgemäß einsetzbaren Additiv eingebracht werden oder kann beispielsweise als Restfeuchte im Polyamid vorliegen. Es wird davon ausgegangen, dass bei vorhandener Feuchtigkeit die Anhydride in die korrespondierenden Säuren umgewandelt werden, die dann die reaktive Spezies bei der Modifizierung darstellen.

In einer weiteren bevorzugten Ausführungsform in Verbindung mit einer der oben oder unten genannten Ausführungsform können verschiedene Carbonsäuren und Säureanhydride im Gemisch eingesetzt werden, besonders bevorzugt sind Gemische von Trimellitsäureanhydrid mit Terephthalsäure oder Isophthalsäure.

In einer weiteren bevorzugten Ausführungsform in Verbindung mit einer der oben oder unten genannten Ausführungsformen besitzt der polymere Träger eine Schmelztemperatur, die kleiner oder gleich dem Schmelzpunkt des zu modifizierenden Polyamids ist.

Erfindungsgemäß können alle üblichen Polyamide eingesetzt werden. Polyamide sind Polymere mit wiederkehrenden Carbonamidgruppen -CO-NH- in der Hauptkette. Sie bilden sich aus
(a) Aminocarbonsäuren oder deren funktionellen Derivaten, z.B. Lactamen; oder aus
(b) Diaminen und Dicarbonsäuren oder deren funktionellen Derivaten.

Durch Variationen der Monomerbausteine sind Polyamide in großer Vielfalt zugänglich. Die wichtigsten Vertreter sind Polyamid 6 aus ε-Caprolactam, Polyamid 6.6 aus Hexamethylendiamin und Adipinsäure, Polyamid 6.10 und 6.12, Polyamid 10.10, Polyamid 12.12, Polyamid 11, Polyamid 12, PACM-12 sowie Polyamid 6-3-T, PA4.6, teilaromatische Polyamide (Polyphthalamide PPA) und die aromatischen Polyamide (Aramide).

Erfindungsgemäß können aber auch alle weiteren Polyamide eingesetzt werden, beispielsweise Copolyamide oder Copolymere von Polyamiden mit anderen Polymeren, beispielsweise mit Polyestern. Es ist auch möglich Blends verschiedener Polyamide und Blends aus Polyamiden mit anderen Polymeren einzusetzen. Besonders bevorzugt sind dabei Polyamid 6 sowie Polyamid 6.6.

Das erfindungsgemäß einsetzbare Additiv kann in allen zuvor genannten Polyamiden und Blends, sowohl in ungefüllten bzw. unverstärkten, als auch in gefüllten bzw. verstärkten Polyamiden eingesetzt werden. Als Füllstoffe / Verstärkungsstoffe können beispielsweise Glasfasern, Kohlefasern, Glaskugeln, Kieselgur, feinkörnige Mineralien, Talkum, Kaolin, Schichtsilikate, CaF₂, CaCO₃ und Aluminiumoxide Verwendung finden.

Das Polyamid ist in einer bevorzugten Ausführungsform in Verbindung mit einer der oben oder unten genannten Ausführungsformen ausgewählt aus unverstärktem, PA6, PA6.6, PA4.6, PA11 oder PA12, besonders bevorzugt ist unverstärktes PA6 oder PA6.6.

In einer anderen bevorzugten Ausführungsform in Verbindung mit einer der oben oder unten genannten Ausführungsformen ist das Polyamid ausgewählt aus verstärktem PA6, PA6.6, PA4.6, PA11 oder PA12, besonders bevorzugt ist das Polyamid ein glasfaserverstärktes Polyamid, insbesondere PA6 oder PA 6.6, verstärkt mit 20 bis 70 Gew.-% Glasfasern, wie etwa 30 bis 50 Gew.-%.

Im Hinblick auf die weiteren erfindungsgemäß einsetzbaren Polymere liegt ebenfalls keine Beschränkung vor. Diese können insbesondere Polyester, Polycarbonate und Polyether sein, sowie Copolymere davon (auch Copolymere mit Polyamiden). Diese Polymere können ebenfalls mit Füll- und/oder Verstärkungsstoffen und -fasern versehen sein, wie bereits für Polyamide ausgeführt. Bevorzugte weitere Polymere sind insbesondere Polyester, wie PET, PBT und deren Copolymere, insbesondere hochviskoses PET (bottle grade).

In einer weiteren bevorzugten Ausführungsform in Verbindung mit einer der oben oder unten genannten Ausführungsformen ist die Säure und/oder das Säureanhydrid oder Gemische daraus in einer Menge von 1 bis 50 Gew.-%, besonders bevorzugt 5 bis 33 Gew.-%, insbesondere 8 bis 30 Gew.-% enthalten, bezogen auf die Gesamtmenge des Additivs. In Ausführungsformen ist die Säure und/oder das Säureanhydrid in Mengen von 10 bis 27 Gew.-% enthalten, wie 10, 11, 12, 13, 14, 15, 16, 17, 18, 19, 20, 21, 22, 23, 24, 25, 26 oder 27 Gew.-%. Die vorstehend genannte Mengenangabe, basierend auf Gewichtsprozent ist typischerweise ausreichend, selbst bei Berücksichtigung der Tatsache, dass die erfindungsgemäß einzusetzenden Säuren bzw. Anhydride unterschiedliche Molekulargewichte aufweisen und unterschiedliche Anzahl an Säuregruppen aufweisen. Eine alternative Möglichkeit zur Definition des Gehalts an Säure oder Säureanhydrid im erfindungsgemäßen Additiv ist daher die Definition über die molare Menge an Säuregruppen pro Kilogramm Additiv. Erfindungsgemäß geeignet sind in diesem Zusammenhang molare Mengen an Säuregruppen (aus der Säurekomponente bzw. Anhydridkomponente des erfindungsgemäßen Additivs) von etwa 0,1 mol/kg bis etwa 6 mol/kg Additiv, bevorzugt 0,5 bis 5 mol/kg Additiv, stärker bevorzugt 0,8 bis 3 mol/kg Additiv.

In einer weiteren bevorzugten Ausführungsform in Verbindung mit einer der oben oder unten genannten Ausführungsformen enthält das erfindungsgemäß einsetzbare Additiv weiter mindestens einen Zuschlagstoff ausgewählt aus der Gruppe bestehend aus Antioxidantien, Nukleierungsmitteln, Stabilisatoren, Schmiermitteln, Formentrennmitteln, Gleitfähigkeitsverbesserern, Füllstoffen, Färbemitteln, Flammverzögerern und -schutzmitteln, Weichmachern, Schlagzähmodifikatoren, Antistatika, Verarbeitungshilfsmitteln, Polyolen und deren Derivaten, sowie weiteren Polymeren, die üblicherweise mit Polyamiden compoundiert werden oder Gemischen daraus. Besonders bevorzugt enthält das Additiv zusätzlich Antioxidantien, Polyole oder Derivate davon, Nukleierungsmittel und/oder Schmiermittel. Dadurch können in einem Verarbeitungsschritt sowohl das modifizierende Additiv als auch die für die gewünschte Endanwendung weiter erforderlichen Zuschlagsstoffe in das Polyamid eingeführt werden. Dies vereinfacht die Polyamidverarbeitung, da zusätzlich Einmischvorgänge und Mischstufen entfallen können.

Geeignete Antioxidantien sind sekundäre aromatische Amine, Phosphite, organische Sulfide, wie Thioester, Kupfersalze und Kupferkomplexe (in Kombination mit halogenhaltigen Synergisten) und sterisch gehinderte Phenole (typischerweise in Kombination mit Phosphiten oder anderen sekundären Antioxidantien).

Geeignete Nukleierungsmittel sind anorganische Verbindungen, z. B. Talkum, pyrogene Kieselsäuren, Kaolin; organische Verbindungen, z. B. Salze von Mono- oder Polycarbonsäuren, wie Calciumstearat oder -montanat, Lithiummontanat, Natriumbenzoat, Aluminium-tert-butylbenzoat, Salze von Adipinsäure, Dibenzylidensorbitole und Derivate davon, Salze von Phosphonsäureestern; Oligomere und Polymere, z. B. Oligomere von Caprolactam, Polyamid 2.2.

Geeignete Schmiermittel und Gleitfähigkeitsverbesserer sind langkettige Fettsäuren und deren Derivate, z.B.: Fettsäureamide, Stearinsäure, Stearinsäuresalze, Stearate; Fettalkohole und deren Ester; Paraffinwachse; Polyolefinwachse, z. B. Polyethylenwachse und polare Polyethylenwachse; Montanwachse, z. B. basierend auf Estern, teilverseiften Estern, Montansäure; Amidwachse; modifizierte Kohlenwasserstoffwachse sowie Molybdändisulfid.

Geeignete Polyole und Derivate davon sind Polyole oder deren Ether- oder Esterderivate, insbesondere mehrwertige Alkohole oder deren Ether- oder Esterderivate, die als Hitzestabilisatoren und Flammschutzmittel bekannt sind. Derartige Zuschlagstoffe haben im Rahmen der vorliegenden Erfindung sich als überraschend wirksame Komponenten erwiesen, die die Fließfähigkeit unerwartet steigern, ohne dass die mechanischen Kennwerte absinken. Bekannte Beispiele derartiger Verbindungen sind Polyole mit 2 bis 12 Hydroxylgruppen und einem Molekulargewicht von 64 bis 2000 g/mol. Besonders geeignete Beispiele sind aliphatische Polyole mit 3 oder mehr-OH Gruppen, wie Pentaerythritol, Dipentaerythritol, Tripentaerythritol und Ether- oder Esterderivate dieser Verbindungen, insbesondere Dipentaerythritol.

Derartige Polyole oder Derivate davon lassen sich einfach und durch bekannte Maßnahmen in das erfindungsgemäße Additiv einführen. Dabei hat sich überraschend gezeigt, dass durch die Einführung dieser Polyole (insbesondere von Dipentaerythritol) als Bestandteil des Additivs eine unerwünschte Belagsbildung auf den hergestellten Formteilen deutlich reduziert werden konnte im Vergleich zu der direkten Zugabe des Polyols während der Verarbeitung.

### Weitere Beispiele dieser Zuschlagstoffe sind wie folgt:

Färbemittel: Titandioxid, Bleiweiß, Zinkweiß, Liptone, Antimonweiß, Ruß, Eisenoxidschwarz, Manganschwarz, Kobaltschwarz, Antimonschwarz, Bleichromat, Mennige, Zinkgelb, Zinkgrün, Cadmiumrot, Kobaltblau, Berliner Blau, Ultramann, Manganviolett, Cadmiumgelb, Schweinfurter Grün, Molybdänorange und -rot, Chromorange und -rot, Eisenoxidrot, Chromoxidgrün, Strontiumgelb, Molybdänblau, Kreide, Ocker, Umbra, Grünerde, Terra di Siena gebrannt und Graphit.

Flammverzögerer und Flammschutzmittel: Antimontrioxid, Hexabromcyclododecan, Tetrachlor- oder Tetrabrombisphenol und halogenierte Phosphate, Borate, Chlorparaffine, roter Phosphor. Geeignet sind auch weitere halogenfreie Flammverzögerer und Flammschutzmittel, insbesondere Melamincyanurat, Melaminpolyphosphat und Aluminiumdiethylphosphinat (DEPAL).

Füllstoffe: Glasfasern, Kohlefasern, Glaskugeln, Kieselgur, feinkörnige Mineralien, Talkum, Kaolin, Schichtsilikate, CaF₂, CaCO₃, Aluminiumoxide etc.

Formentrennmittel und Verarbeitungshilfsstoffe: Wachse (Montanate), Montansäurewachse, Montanesterwachse, Polysiloxane, Stearate, Polyvinylalkohol, SiO₂, Calciumsilikate.

Schlagzähmodifikatoren: Polybutadien, EPM, EPDM, HDPE, Butylacrylate, MAH-funktionalisierte Polymere, funktionalisierte Olefin-Acrylatcopolymere etc.

Antistatika: Ruß, mehrwertige Alkohole, Fettsäureester, Amine, Säureamide, quarternäre Ammoniumsalze.

Diese Zuschlagstoffe können in den üblichen, dem Fachmann bekannten Mengen verwendet werden. Erfindungsgemäß ist es möglich, die Zuschlagsstoffe bereits in das erfindungsgemäße Additiv einzuarbeiten, so dass bei der Herstellung von Formteilen aus Polyamid bereits ein Additiv alle notwendigen Modifikatoren und Zuschlagsstoffe umfasst. Alternativ ist jedoch auch eine andere Vorgehensweise möglich, also die Einmischung aller oder eines Teils der gewünschten Zuschlagsstoffe über getrennte Additive, die auch beispielsweise an unterschiedlichen Stellen (bei unterschiedlichen Temperaturen) in den Herstellungsprozess gegeben werden. Hierbei ist sicherlich auch darauf abzustellen, inwieweit die unterschiedlichen Zuschlagsstoffe mit dem erfindungsgemäß einsetzbaren Additiv, insbesondere der Säure bzw. dem Säureanhydrid verträglich sind, da unerwünschte Nebenreaktionen im Additiv selber natürlich ausgeschlossen werden müssen. Geeignete Ausführungsformen kann der Fachmann auf der Grundlage seines Fachwissens herstellen.

Erfindungsgemäß einsetzbare Additive umfassen besonders bevorzugt eine Säurekomponente, bevorzugt Adipinsäure oder Terephthalsäure, in einer Menge von 7 bis 25 Gew.-%, zusammen mit einem Olefin-Acrylsäureester-Copolymer, oder Olefin-Methacrylsäureester-Copolymer in einer Menge von mehr als 40 Gew.-% (bezogen auf das Gewicht der Additivmischung), bevorzugt in einer Menge von mehr als 65 Gew.-%. In Ausführungsformen ist ein weiteres reaktives Polymer enthalten, wie vorstehend beschrieben, bevorzugt ein Polyamid, wie PA6, oder ein Polyester, wie PBT. Diese zusätzliche Komponente ist bevorzugt in dieser Mischung in einer Menge von 10 bis 30 Gew.-%, stärker bevorzugt von 15 bis 25 Gew.-% enthalten (bezogen auf das Gewicht der Additivmischung).

In einer bevorzugten Ausführungsform in Verbindung mit einer der oben oder unten genannten Ausführungsformen erfolgt das Einbringen der Säure und/oder des Säureanhydrids in den Träger, vorzugsweise polymeren Träger in der Schmelze und das gleichmäßige Verteilen in der Schmelze in einer Mischvorrichtung wie einem Extruder. Weitere geeignete Mischvorrichtungen ebenso wie geeignete Verfahrensparameter sind dem Fachmann bekannt. Besonders bevorzugt sollte die Verarbeitungstemperatur im Extruder über dem Schmelzpunkt der jeweiligen Säure(n) liegen. Das Zumischen des im ersten Schritt erhaltenen Gemischs zu dem Polyamid in der Schmelze erfolgt ebenfalls vorzugsweise in einem Extruder. Besonders bevorzugt beträgt die Temperatur im Extruder 100 bis 300°C, insbesondere 220 bis 270°C. Geeignete Verfahrensparameter, insbesondere Temperaturen, kann der Fachmann basierend auf seinem Fachwissen auswählen. In Abhängigkeit insbesondere des zu verarbeitenden Polyamids können Verarbeitungstemperaturen im Bereich von 240° bis 270°C, aber auch Temperaturen im Bereich von 220° bis 240°C geeignet sein. Diese kann der Fachmann, wie vorstehend ausgeführt, jedoch auf der Grundlage der üblichen Verfahrensparameter auswählen.

Das erfindungsgemäße Verfahren nach Anspruch 13 umfasst die Vermischung des Additivs mit einem Polyamidmaterial in einer üblichen Mischvorrichtung wie einem Extruder. Das erfindungsgemäße Verfahren umfasst ebenso den Einsatz des Additivs mit einem Polyamidmaterial als Granulatmischung oder als Dry-Blend im Spritzguss. In Abhängigkeit vom Ausgangsmaterial und der Additivzusammensetzung werden Verfahrensparameter, wie insbesondere die Temperatur, basierend auf üblichen, dem Fachmann bekannten Vorgehensweisen eingestellt. Die Menge an Additiv wird so gewählt, dass eine gewünschte Zielviskosität, Fließfähigkeit (Fließweglänge z.B. einer Fließspirale im Spritzguss) erreicht wird, wozu ggf. wenige orientierende Versuche notwendig sein können (aufgrund der linearen Abhängigkeit der Viskositätsmodifikation von der Additivmenge (Säuremenge) ist dies aber lediglich eine Routineaufgabe). Es hat sich gezeigt, dass Additivmengen (bezogen auf die Säuregruppen Säure bzw. des Anhydrids) im Bereich von 0,001 bis 0.5 mol/kg (Menge bezogen auf Mischung mit Polyamid), wie etwa 0,005 bis 0,15 oder 0,01 bis 0,1 mol/kg ausreichend sind, um die gewünschte Viskositätseinstellung/ Einstellung der Fließfähigkeit zu erreichen. Selbstverständlich können aber in speziellen Fällen andere Einsatzmengen gewählt werden. Die vorliegende Erfindung ermöglicht so eine zielgerichtete Viskositätseinstellung/ Einstellung der Fließfähigkeit durch Zugabe des Additivs. Da dabei das Drehmoment während der Extrusion abnimmt, wird eine Erhöhung des Durchsatzes ermöglicht. In Anwendungsuntersuchungen hat sich darüber hinaus gezeigt, dass bei Einsatz des erfindungsgemäß einsetzbaren Additivs nicht nur das Drehmoment abnimmt, sondern der Verlauf des Drehmoments weniger starke Ausschläge/Änderungen zeigt. Dies deutet auf eine bessere, homogenere Verarbeitung und Durchmischung des Materials hin, was zu besseren Produkten und/oder zur Vermeidung von Ausschuss führen kann.

Bei semiaromatischen Polyamiden kommen typischerweise hohe Verarbeitungstemperaturen zum Tragen. Weiterhin bestehen hohe Anforderungen betr. Langzeitstabilität bei erhöhten Temperaturen. Daher ist es bei solchen Polyamiden wichtig, dass die Säuren so gewählt sind, dass sie möglichst wenig ausgasen. Neben einer guten Kompatibilität ist dies ist ein wichtiger Grund für die bevorzugte Verwendung aromatischer Carbonsäuren bei der erfindungsgemäßen Modifikation von semiaromatischen Polyamiden. Ähnliche Überlegungen gelten auch für hochviskose Polyester, insbesondere PET, die auch hohe Verarbeitungstemperaturen erfordern und nur ein enges Verarbeitungsfenster zur Verfügung stellen. In einer weiteren bevorzugten Ausführungsform werden höhermolekulare Carbonsäuren, insbesondere aromatische Carbonsäuren, eingesetzt, entweder direkt über die Auswahl einer aromatischen Carbonsäure mit hohem Molekulargewicht (z.B. 2,6-Naphtahlenedicarbonsäure) oder durch In-situ-Bildung von höhermolekularen Carbonsäuren während der Herstellung eines erfindungsgemäß einsetzbaren Additivs. Dies kann dadurch erreicht werden, dass zusätzlich zu dem Einsatz des nichtreaktiven polymeren Trägers reaktive Polymere zugegeben werden. Diese reaktiven Polymere sind bevorzugt Polyamide oder Polyester (beispielsweise PBT, PC, Polybutyrate, Polycaprolacton etc.). So können höhermolekulare Reaktionsprodukte erhalten werden, die die notwendigen Säure- oder Anhydridgruppen aufweisen und im Hinblick auf die höheren Verarbeitungstemperaturen bei der Modifikation von semiaromatischen Polyamiden wenig oder keine Neigung zur Ausgasung zeigen.

Vor allem, wenn die Viskosität eines teilaromatischen Polyamids gezielt eingestellt werden soll, kommen bevorzugt erfindungsgemäß einsetzbare Additive zum Einsatz, die auf aromatischen Carbonsäuren als Säurekomponente basieren. In einer weiteren bevorzugten Ausführungsform in Verbindung mit einer der oben oder unten genannten Ausführungsformen, kann als Säure eine (oder mehrere) aromatische Carbonsäure, bevorzugt eine aromatische Dicarbonsäure, besonders bevorzugt Terephthalsäure zugesetzt werden.

Das erfindungsgemäß einsetzbare Additiv ist einfach einzusetzen und zeigt ausgezeichnetes Verhalten in Spritzgussverfahren durch schnellere Zykluszeiten und verbessertes Fließverhalten. Die erfindungsgemäß erhaltenen Polyamide weisen gute mechanische Eigenschaften auf und eine verbesserte Schlagzähigkeit.

Die folgenden Beispiele erläutern die vorliegende Erfindung:

### Methoden:

Alle Compoundierungen erfolgten auf einem Doppelschneckenextruder der Firma Leistritz (ZSE27MAXX - 48D). Es wurde das Drehmoment des Extruders in Prozent aufgezeichnet. Ebenso erhält man einen Wert für die Stromaufnahme pro kg Compound als spezifische Energie [kWh/kg]. Die Zugabe der Adipinsäure bei Herstellung von Additiv 1, Additiv 2 und Additiv 3 sowie die Zugabe von Terephthalsäure bei der Herstellung von Additiv 4 und Additiv 5 und die Zugabe der Additive zu Polyamiden gemäß der Beispiele erfolgte gravimetrisch direkt während der Compoundierung.

Nach dem Trocknen wurden aus dem Compound auf einer Spritzgießmaschine "Demag Ergotech 60/370-120 concept" Norm-Prüfstäbe zur Bestimmung der mechanischen Kennwerte (ISO 527), der Schlagzähigkeit (ISO 179/1eA) sowie mit einem Campus Werkzeug Fließspiralen (Dicke 3mm) hergestellt. Die Herstellung von Fließspiralen im Spritzgussverfahren erfolgte auch direkt aus Polyamid und aus einer Granulatmischung aus Polyamid und erfindungsgemäß einsetzbarem Additiv.

Die Messung von E-Modul [MPa], Zugfestigkeit [MPa] (Dehnung [%]) und Bruchspannung [MPa] (Bruchdehnung [%]) erfolgte im Zugversuch nach ISO 527 mit einer statischen Materialprüfmaschine Zwick Z010.

Die Messung der Schlagzähigkeit erfolgte gemäß ISO 179/1eA im Kerbschlagbiegeversuch nach Charpy mit einem Pendelschlagwerk HIT PSW 5,5J.

Die Länge der Fließspirale wurde in cm gemessen.

GPC-Messungen zur Bestimmung der Polydispersität und mittleren Molmassen (Mn und Mw) wurden unter den folgenden Messbedingungen durchgeführt: Säulenkombination PSS PFG, 7 µm, LINEAR M, ID 8,0 mm x 300 mm, PSS PFG, 7 µm, LINEAR M, ID 8,0 mm x 300 mm, Temperatur 23 °C, Hexafluoroisopropanol (HFIP) / 0,05 M Kaliumtrifluoracetat als mobile Phase, Fließrate 1 ml/min, Probenkonzentration 3,0 g/l, Differentialrefraktometer (RID)-Detektor, Auswertung gegen Poly(methylmethacrylat)-Standard.

Die Bestimmung der relativen Viskosität (RV) erfolgte in 96%iger Schwefelsäure nach ISO 307. Bei diesem Verfahren wurde die Lösungsviskosität des Polyamids als relative Viskosität in Schwefelsäure im Ubbelohde-Viskosimeter mit einem ViscoSystem® AVS 470 bestimmt.

### Additive:

| **Anteil [Gew.-%]** | **Additiv 1** | **Additiv 2** | **Additiv 3** |
|---|---|---|---|
| Adipinsäure | 8 | 12 | 12 |
| Ethylen-Methylacrylat-Copolymer | 92 | 88 | 69 |
| Polyamid 6 | | | 19 |

Die Additive 1 und 2 wurden jeweils auf einem Doppelschneckenextruder Leistritz ZSE 27 MAXX 48D bei 100 °C bis 180 °C (in einem entsprechenden Temperaturprofil) mit einem Durchsatz von 18kg/h hergestellt. Additiv 3 wurde ebenfalls mit dem genannten Extruder hergestellt, bei Temperaturen von 180°C bis 250°C und einem Durchsatz von 15 kg/h.

### Vergleichsadditiv 1:

Es wurden 2% Adipinsäure in 98% Polyamid 6 (Ultramid B27 der Firma BASF) auf einem Doppelschneckenextruder Leistritz ZSE 27 MAXX 48D bei 260°C mit einem Durchsatz von 15 kg/h extrudiert.

### Vergleichsadditiv 2:

Es wurden 8% Adipinsäure in 92% Polyamid 6 (Ultramid B27 der Firma BASF) auf einem Doppelschneckenextruder Leistritz ZSE 27 MAXX 48D bei 260°C mit einem Durchsatz von 15 kg/h extrudiert.

### Beispiel 1:

Additiv 1 und Vergleichsadditiv 1 wurden in ein viskoses Polyamid 6 (Alphalon 32 der Firma Grupa Azoty) eingearbeitet und ein- bzw. zweimal in einem Doppelschneckenextruder Leistritz ZSE 27 MAXX 48D bei 260°C mit einem Durchsatz von 15 kg/h extrudiert.

Folgende Compounds wurden hergestellt:

**Tabelle 1:**

| | **Polyamid 6 [Gew.-%]** | **Additiv 1 [Gew.-%]** | **Vergleichsadditiv 1 [Gew.-%]** | **Extrusionen** |
|---|---|---|---|---|
| R01 | 100 | | | 1 |
| R02 | 100 | | | 2 |
| R03 | 98 | 2 | | 1 |
| R04 | 98 | 2 | | 2 |
| R05 | 98 | | 2 | 1 |
| R06 | 98 | | 2 | 2 |
| R07 | 97 | | 3 | 1 |
| R08 | 97 | | 3 | 2 |

Es wurden Massedruck, Drehmoment des Extruders, die Viskosität der Compounds und die Viskosität nach Spritzguss an den Prüfkörpern untersucht. Des Weiteren wurde auch die Länge der Fließspirale bestimmt.

Die Ergebnisse sind in Tabelle 2 dargestellt.

**Tabelle 2:**

| | **Drehmoment [%]** | **Massedruck [bar]** | **Relative Viskosität Compound** | **Relative Viskosität Spritzguss** | **Spirallänge [cm] (%)** |
|---|---|---|---|---|---|
| R01 | 78 | 20 | 3,28 | 3,3 | 34,6 (100) |
| R02 | 70 | 20 | 3,29 | 3,28 | 35,7 (103,18) |
| R03 | 56 | 17 | 3,05 | 2,98 | 49,2 (142,20) |
| R04 | 48 | 15 | 2,97 | 2,9 | 49,1 (141,91) |
| R05 | 74 | 20 | 3,15 | 3,15 | 41,1 (118,79) |
| R06 | 52 | 20 | 3,16 | 3,13 | 40,9 (118,21) |
| R07 | 73 | 20 | 3,14 | 3,11 | 40,9 (118,21) |
| R08 | 63 | 18 | 3,11 | 3,08 | 39 (112,72) |

Bei der Verarbeitung im Extruder zeigt sich bei den erfindungsgemäß erhaltenen Compounds eine deutliche Abnahme des Drehmoments und ein Sinken des Massedrucks, was zu einer einfacheren Verarbeitbarkeit führt und einen höheren Durchsatz ermöglicht. Des Weiteren zeigt sich für diese Compounds eine Abnahme der relativen Viskosität und eine Zunahme der Länge der Fließspirale.

Ferner nimmt die Viskosität von Compounds, die einmal extrudiert wurden, bei der zweiten Extrusion bei allen Varianten nur geringfügig ab. Gleiches gilt auch für die Änderung der Viskosität nach dem Spritzguss.

### Beispiel 2:

In einem weiteren Versuch wurde das Additiv 1 und das Vergleichsadditiv 2 in ein viskoses Polyamid 6 (Alphalon 32 der Firma Grupa Azoty) eingearbeitet und einmal in einem Doppelschneckenextruder Leistritz ZSE 27 MAXX 48D bei 260°C mit einem Durchsatz von 15 kg/h extrudiert.

Folgende Compounds wurden hergestellt:

**Tabelle 3:**

| | **Polyamid 6 [Gew.-%]** | **Additiv 1 [Gew.-%]** | **Vergleichsadditiv 2 [Gew.-%]** |
|---|---|---|---|
| R09 | 100 | | |
| R10 | 99 | 1 | |
| R11 | 98 | 2 | |
| R12 | 97 | 3 | |
| R13 | 99 | | 1 |
| R14 | 98 | | 2 |
| R15 | 97 | | 3 |

Es wurden Drehmoment des Extruders, spezifische Energie und relative Viskosität der Compounds bestimmt.

Die Ergebnisse sind in Tabelle 4 dargestellt.

**Tabelle 4:**

| | **Drehmoment Extruder [%]** | **Spezifische Energie [kWh/kg]** | **Relative Viskosität** |
|---|---|---|---|
| R09 | 85 | 1,77 | 3,22 |
| R10 | 65 | 1,55 | 3,15 |
| R11 | 63 | 1,54 | 3,09 |
| R12 | 61 | 1,47 | 3,02 |
| R13 | 85 | 1,76 | 3,18 |
| R14 | 83 | 1,75 | 3,16 |
| R15 | 81 | 1,73 | 3,13 |

In den erfindungsgemäßen Beispielen R10 bis R12 zeigt sich mit steigender Dosierung von Additiv 1 wiederum eine deutliche Abnahme des Drehmoments, was zu einer einfacheren Verarbeitbarkeit führt und einen höheren Durchsatz ermöglicht.

Ferner zeigt sich für die Compounds R10 bis R12 eine Abnahme der relativen Viskosität.

In den Vergleichsbeispielen R13 bis R15 wird trotz steigender Dosierung von Vergleichsadditiv 2 eine sehr geringe Abnahme des Drehmoments gegenüber der Compoundierung von R10 bis R12 (mit erfindungsgemäßem Additivzusatz) festgestellt, so dass die Verarbeitbarkeit nicht verbessert wird und kein höherer Durchsatz möglich wird.

Vergleicht man R11 mit R14 und R12 mit R15, ist bei gleicher Dosierung von Additiv 1 bzw. Vergleichsadditiv 2 eine stärkere Abnahme der Viskosität bei Zusatz von Additiv 1 messbar, d.h. die Reaktivität des erfindungsgemäß einsetzbaren Additivs ist bei gleicher Dosierung viel höher. Des Weiteren liegt eine lineare Abhängigkeit der relativen Viskosität der erfindungsgemäß modifizierten Compounds mit der Menge an Additiv vor.

### Beispiel 3:

Die Additive 1, 2 und 3 sowie im Vergleich dazu Calciummontanat als übliches hochwertiges Gleitmittel für Polyamide wurden in ein Polyamid 6 mit Spritzgussqualität (Tarnamid T27 der Firma Grupa Azoty) zusammen mit unterschiedlichen Gehalten an Glasfasern (ChopVantage® HP3540 von der Firma PPG Industries Fiber Glass) analog wie in Beispiel 1 extrudiert und die relative Viskosität sowie die mechanischen Kennwerte bestimmt.

Folgende Compounds wurden hergestellt:

**Tabelle 5**

| | ***Polyamid 6*** | ***Glasfaser*** | ***Additiv 1*** | ***Additiv 2*** | ***Additiv 3*** | ***Calciummontanat*** |
|---|---|---|---|---|---|---|
| | ***[Gew. %]*** | ***[Gew. %]*** | ***[Gew. %]*** | ***[Gew. %]*** | ***[Gew. %]*** | ***[Gew. %]*** |
| R16 | 70 | 30 | | | | |
| R17 | 69,65 | 30 | 0,35 | | | |
| R18 | 69,3 | 30 | 0,7 | | | |
| R19 | 68,6 | 30 | 1,4 | | | |
| R20 | 67,9 | 30 | 2,1 | | | |
| R21 | 66,85 | 30 | | | 2,1 | |
| R21-A | 66,85 | 30 | | 2,1 | | |
| R22 | 50 | 50 | | | | |
| R23 | 49,75 | 50 | 0,25 | | | |
| R24 | 49,5 | 50 | 0,5 | | | |
| R25 | 49 | 50 | 1 | | | |
| R26 | 48,5 | 50 | 1,5 | | | |
| R27 | 69,65 | 30 | | | | 0,35 |
| R28 | 69,3 | 30 | | | | 0,7 |
| R29 | 68,6 | 30 | | | | 1,4 |
| R30 | 67,9 | 30 | | | | 2,1 |
| R31 | 49,75 | 50 | | | | 0,25 |
| R32 | 49,5 | 50 | | | | 0,5 |
| R33 | 49 | 50 | | | | 1 |
| R34 | 48,5 | 50 | | | | 1,5 |

Die Ergebnisse sind in Tabelle 6 dargestellt. Leere Zellen innerhalb der Tabelle bedeuten, dass die Werte nicht bestimmt wurden.

Ein genauer Vergleich der Beispiele und Vergleichsbeispiele demonstriert nochmals die Vorteile der vorliegenden Erfindung. Für die Versuche mit einem Glasfaseranteil von 30% müssen die Ergebnisse für R17 bis R21 einerseits (erfindungsgemäß) mit den Ergebnissen für R27 bis R30 verglichen werden. Das jeweilige Ausgangsmaterial ist durch R16 repräsentiert. Bei den erfindungsgemäßen Versuchen zeigt sich eine deutliche Verlängerung der Fließspirale (36,1 cm auf 47,3 cm), während bei den Vergleichsversuchen nur eine vernachlässigbare Verbesserung der Fließfähigkeit auftritt (36,1 cm auf 37,8 cm). Dafür sinkt bei den Vergleichsversuchen das mechanische Eigenschaftsprofil drastisch ab, während bei den erfindungsgemäßen Versuchen dieses auf einem außerordentlich hohen Niveau bleibt. Die gleiche Tendenz zeigt sich auch bei den Versuchen mit einem Glasfaseranteil von 50% (R23 bis R26 sind erfindungsgemäß, R31 bis R34 sind Vergleichsversuche). Das Ausgangsmaterial ist durch R22 repräsentiert. Auch hier zeigt die vorliegende Erfindung eine deutliche Verbesserung der Fließfähigkeit bei gleichzeitigem Erhalt des guten mechanischen Eigenschaftsprofils, Effekte die in den Vergleichsversuchen bei weitem nicht erreicht werden.

Hier zeigt sich, dass durch den Einsatz des erfindungsgemäß einsetzbaren Additivs auch bei Glasfaser gefüllten Polyamiden eine gezielte Viskositätseinstellung möglich ist, ohne dass die mechanischen Kennwerte abfallen. Damit lassen sich derartig modifizierte gefüllte (verstärkte) Polyamide sehr gut verarbeiten, insbesondere im Spritzguss. Demgegenüber zeigt der Einsatz eines herkömmlichen Gleitmittels nur eine geringe Verbesserung der Fließeigenschaften, zudem fallen wichtige mechanische Kennwerte ab. Darüber hinaus können Gleitmittel zu Ausblühungen führen. Die erfindungsgemäßen Beispiele zeigen weiter, dass durch die Verbesserung der Fließeigenschaften (Fließspirale) Polyamidtypen erhalten werden, die gut und zuverlässig verarbeitet werden können. Gezeigt wurde ebenfalls, dass auch ein Additiv mit einem gewissen Anteil an einem reaktiven Polymer, im vorliegenden Beispiel R21 einem Polyamid 6, vermischt mit dem nichtreaktiven polymeren Träger ebenfalls die gewünschte Modifizierung ermöglicht. Überraschenderweise werden hierbei mit dem zusätzlichen Polyamidanteil neben einer etwas längeren Fließspirale im Vergleich zu Beispiel R21-A (analoges Additiv ohne Polyamidanteil) auch eine höhere Kerbschlagzähigkeit und eine höhere Dehnung erreicht. Weiterhin kann der Anteil an nichtreaktivem polymerem Träger verringert werden, was Vorteile im Hinblick auf Mischbarkeit und ggf. Kosten bringen kann. Dank der guten Verarbeitbarkeit ermöglichen mit erfindungsgemäß einsetzbaren Additiven hergestellte, gefüllte Compounds die sichere Füllung dünnwandiger Bereiche oder großer, komplexer Teile. Als zusätzliche Option können die Verarbeitungstemperaturen beim Spritzgießen um bis zu 30 °C verringert werden, was die Kühlzeiten verkürzt und den Energiebedarf senkt. Durch das leichtere Fließen sinkt zudem der erforderliche Spritzdruck, so dass Verarbeiter schonender oder auf kleineren Maschinen produzieren können. Da mit Glasfaser gefülltes Polyamid inzwischen in vielen Bereichen eingesetzt wird, in denen bisher Bauteile aus Metall zum Einsatz kamen, sind derartige Verbesserungen ein wichtiger Schritt hin zur weiteren Substitution aufwendiger Metallkonstruktionen durch deutlich leichtere und kostengünstigere, zum Teil hoch integrierte Spritzgussteile (im Vergleich zu Metallbauteilen).

**Tabelle 6:**

| | ***Relative Viskosität (nach Compoundierung)*** | ***Fließspirale*** | ***Zugfestigkeit*** | ***Bruchdehnung*** | ***E-Modul*** | ***Kerbschlagzähigkeit*** | ***Schlag-zähigkeit*** |
|---|---|---|---|---|---|---|---|
| | | ***[cm]*** | ***[MPa]*** | ***[%]*** | ***[Mpa]*** | ***kJ*/*m2*** | ***kJ*/*m2*** |
| R16 | 2,75 | 36,1 | 195 | 6 | 9640 | 12,95 | 90,06 |
| R17 | 2,72 | 36,9 | 192 | 5,9 | 9510 | 12,39 | 86,14 |
| R18 | 2,68 | 39,9 | 190 | 5,8 | 9530 | 12,64 | 86,52 |
| R19 | 2,62 | 44,3 | 187 | 5,7 | 9430 | 12,67 | 83,98 |
| R20 | 2,57 | 47,3 | 187 | 5,6 | 9450 | 12,73 | 84,39 |
| R21 | 2,49 | 48,8 | 192 | 7 | 9240 | 14,16 | |
| R21-A | 2,62 | 48,0 | 183 | 6,0 | 9620 | 12,63 | |
| R22 | 2,71 | 25,1 | 231,9 | | 15780 | 18,33 | 92,8 |
| R23 | 2,66 | 27,4 | 230,7 | | 16079 | 17,6 | 88,75 |
| R24 | 2,60 | 28,9 | 233,8 | | 16248 | 17,44 | 91,08 |
| R25 | 2,54 | 32,6 | 229,5 | | 15995 | 17,26 | 88,94 |
| R26 | 2,49 | 36,7 | 227,7 | | 15656 | 17,26 | 86,23 |
| R27 | 2,76 | 35,0 | 186 | 5,5 | 9520 | 11,62 | 73,12 |
| R28 | 2,74 | 36,1 | 178 | 5,1 | 9540 | 9,88 | 59,66 |
| R29 | 2,72 | 37,2 | 177 | 5,2 | 9510 | 10,13 | 60,86 |
| R30 | 2,72 | 37,8 | 175,0 | 5,1 | 9540 | 10,04 | 57,62 |
| R31 | 2,73 | 25,7 | 225,1 | | 15508 | 17,44 | 84,75 |
| R32 | 2,70 | 27,0 | 215,2 | | 16042 | 15,82 | 74,56 |
| R33 | 2,71 | 26,4 | 215,3 | | 15913 | 15,74 | 71,96 |
| R34 | 2,70 | 26,5 | 211,0 | | 15712 | 16,4 | 76,4 |

### Beispiel 4:

Ein Regranulat aus hochviskosen PA6.6 Produktionsabfällen (hochviskose Faserabfälle) wurde zusammen mit Additiv 2 analog wie in Beispiel 1 beschrieben extrudiert und es wurden die relativen Viskositäten sowie die mechanischen Kennwerte bestimmt. Parallel dazu wurde im Vergleich ein kommerzielles Polyamid 6 (Ultramid A27 der Firma BASF mit relativer Viskosität von 2,7) direkt auf der Spritzgussmaschine verarbeitet und die entsprechenden Daten betr. Fließfähigkeit und Mechanik ermittelt. Tabelle 7 fasst die Zusammensetzungen zusammen.

**Tabelle 7**

| | ***Regranulat aus Faserabfällen PA6.6*** | ***Additiv 2*** | ***PA6.6 Neuware Ultramid A27*** |
|---|---|---|---|
| | ***Hochviskos*** | | ***Spritzgussqualität*** |
| | ***[%]*** | ***[%]*** | ***[%]*** |
| R35 | 100 | 0 | 0 |
| R36 | 98 | 2 | 0 |
| R37 | 96 | 4 | 0 |
| R38 | 0 | 0 | 100 |

Hier zeigt sich erneut, dass selbst beim Einsatz eines nicht genau spezifizierten Polyamids (die genauen Kennwerte des Regranulats waren zum Versuchszeitpunkt nicht bekannt), eine exakte Steuerung der Viskositätseinstellung mit dem erfindungsgemäß einsetzbaren Additiv möglich ist, wobei erneut eine lineare Abhängigkeit der Viskositätsentwicklung von der Additivmenge beobachtet werden konnte. Derartige lineare Abhängigkeiten vereinfachen die Dosierung, da keine komplexen Abhängigkeiten berücksichtigt werden müssen. Darüber hinaus zeigt sich erneut, dass die wichtigen mechanischen Kennwerte nicht verschlechtert werden (sondern sich teilweise eher verbessern), so dass ein hochwertiges "Spritzgußpolyamid" nach der Compoundierung mit dem erfindungsgemäß einsetzbaren Additiv erhalten wird (Tabelle 8). Dies ist insbesondere daran zu erkennen, dass das mit Hilfe des erfindungsgemäß einsetzbaren Additivs erreichte Eigenschaftsprofil sowie die damit erreichte Fließfähigkeit (Länge der Fließspirale) in diesem Beispiel gleich in mehreren Punkten die Eigenschaften des hochwertigen kommerziellen Spritzgusstyps Ultramid A27 übertreffen.

**Tabelle 8:**

| | **Relative Viskosität (vor dem Spritzguß)** | ***Fließspirale*** | ***Zugfestigkeit*** | ***Dehnung @ Zugfestigkeit*** | ***E-Modul*** | ***Kerbschlagzähigkeit*** | ***Mn GPC*** | ***Mw GPC*** | ***GPC PDI*** |
|---|---|---|---|---|---|---|---|---|---|
| | | ***[cm]*** | ***[MPa]*** | ***[%]*** | ***[MPa]*** | ***kJ*/*m2*** | ***[Mn*/*Da]*** | ***[Mw*/*Da]*** | ***[Mw*/*Mn]*** |
| R35 | 3,19 | 38,5 | 84,9 | 5,3 | 3340 | 4,19 | 33800 | 89500 | 2,65 |
| R36 | 2,92 | 53,39 | 83,2 | 5,4 | 3320 | 5,12 | | | |
| R37 | 2,7 | 56,72 | 81,4 | 5,6 | 3300 | 4,78 | 28000 | 68000 | 2,43 |
| R38 | 2,7 | 54,44 | 84,7 | 5,5 | 3100 | 3,08 | 32400 | 73500 | 2,27 |

Die GPC Daten und die in Figur 2 dargestellten GPC Kurven zeigen darüber hinaus, dass die vorliegende Erfindung eine Änderung der Fließfähigkeit/Viskosität ermöglicht, ohne dabei nachteilig die Molmassenverteilung des Ausgangsmaterials zu verändern. Insbesondere findet keine wesentliche Verbreiterung der Molmassenverteilung statt, noch werden größere Mengen an niedermolekularem Material gebildet. Dies ist durch den Vergleich der Molmassenverteilungen für die Proben R35 und R37 dargestellt, wo im Wesentlichen eine Parallelverschiebung der Molmassenverteilungskurve zu sehen ist. Darüber hinaus führt der Einsatz des erfindungsgemäß einsetzbaren Additivs auch bei nachfolgenden Spritzgussanwendungen zu keiner weiteren wesentlichen Veränderung des Materials. Dies wird durch die beiden Molmassenverteilungskurven R37 (nach Compoundierung, in Figur2 "R37 vor Spritzguss" genannt und R37 (nach Spritzguss) verdeutlicht, wo keine merkliche Veränderung des Materials mehr auftritt.

Die GPC Daten für das Material nach Spritzguss sind: Mw 64400 Da, Mn 28100 Da und PDI 2,29. Somit zeigt sich, dass keine wesentliche weitere Reaktion (und damit ggf. einhergehende Verschlechterung der Materialeigenschaften) mehr stattfindet, da beispielsweise der Wert für Mn des Spritzgussteils 28100 Da beträgt (verglichen mit einem Wert für Mn von 28000 Da für das Material nach Compoundierung).

### Beispiel 5:

Adipinsäure wurde in verschiedenen Konzentrationen in ein viskoses Polyamid 6 (Alphalon 32 der Firma Grupa Azoty) eingearbeitet und in einem Doppelschneckenextruder Leistritz ZSE 27 MAXX 48D bei 260°C mit einem Durchsatz von 15 kg/h extrudiert und die relative Viskosität bestimmt. Zusätzlich wurde Additiv 1 in das gleiche Polyamid 6 wie in Beispiel 3 und wie dort beschrieben eingearbeitet ohne den Zusatz von Glasfasern und die relative Viskosität bestimmt. Weiterhin wurden verschiedene Konzentrationen von Additiv 1 mit dem gleichen Regranulat aus Faserabfällen wie in Beispiel 4 wie dort beschrieben compoundiert und die relative Viskosität gemessen.

Die ermittelten relativen Viskositäten sind in Tabelle 9 jeweils zugeordnet den für die Herstellung des jeweiligen Additivs verwendete Säurekonzentrationen bzw. der Konzentrationen der Adipinsäure bei der direkten Zugabe. Die Säurekonzentrationen sind in Gew.% bezogen auf den Polyamidanteil im fertigen Polyamidcompound angegeben. Leere Zellen innerhalb einer Zeile bedeuten, dass das entsprechende Additiv nicht mit der in der Zeile angegebenen Adipinsäurekonzentration hergestellt wurde. Zusätzlich werden in Tabelle 9 die gemessenen relativen Viskositäten aus den folgenden vorhergegangenen Beispielen zusammengefasst: Beispiel 2 (Additiv 1 und Vergleichsadditiv 2 in viskoses PA6), Beispiel 3 (Additiv 1 in PA6 mit Spritzgussqualität mit 30%GF und mit 50%GF) und Beispiel 4 (Additiv 2 in Regranulat aus Faserabfällen).

In Tabelle 9 entsprechen beispielsweise 0,04 Gew.-% Adipinsäure der Dosierung von 0,35 Gew.-% Additiv 1 aus Beispiel 3 (R17), oder der Dosierung von 0,25 Gew.-% Additiv 1 aus Beispiel 3 (R23). 0,08 Gew.-% Adipinsäure entsprechen beispielsweise der Dosierung von 1 Gew.-% des Additivs 1 aus Beispiel 2 (R10), oder der Dosierung von 0,7% Additiv 1 aus Beispiel 3 (R18), oder der Dosierung von 0,5% Additiv 1 aus Beispiel 3 (R24) etc. Die Ergebnisse aus Tabelle 9 sind in Figur 1 grafisch dargestellt.

Wie aus Figur 1 zu erkennen, ändert sich die Viskosität bei Zusatz des erfindungsgemäß einsetzbaren Additivs linear, d.h. mit zunehmender Menge an Additiv nimmt die relative Viskosität ab. Bei Verwendung der Vergleichsadditive 1 und 2 sowie bei Verwendung von Adipinsäure allein wurde keine lineare Abnahme der relativen Viskosität beobachtet. Außerdem ist der Effekt der Viskositätsabsenkung bei den Vergleichsadditiven deutlich geringer. Lediglich das erfindungsgemäß einsetzbare Additiv ermöglicht somit eine kontrollierte und reproduzierbare Einstellung der Viskosität.

**Tabelle 9:**

| **Adipinsäure [Gew.-%]** | **Rel. Viskosität bei Additiv 1 in PA6** | **Rel. Viskosität bei Adipinsäure direkt in PA6** | **Rel. Viskosität bei Vergleichsadditiv 2 in PA6** | **Rel. Viskosität bei Additiv 1 in PA6GF50 2,7** | **Rel. Viskosität bei Additiv 1 in PA6GF30 2,75** | **Rel. Viskosität bei Additiv 1 in PA6 2,75** | **Rel. Viskosität bei Additive 1 und 2* in Regranulat aus Faserabfällen PA6.6** |
|---|---|---|---|---|---|---|---|
| bei 0% Adipinsäure | 3,22 | 3,25 | 3,22 | 2,71 | 2,75 | 2,75 | 3,19 |
| bei 0,04% Adipinsäure | | | | 2,66 | 2,72 | 2,72 | |
| bei 0,08% Adipinsäure | 3,15 | | 3,18 | 2,6 | 2,68 | 2,70 | |
| bei 0,12% Adipinsäure | | | | | | | 3,06 |
| bei 0,16% Adipinsäure | 3,09 | | 3,16 | 2,54 | 2,62 | 2,66 | 3,02 |
| 0,2% Adipinsäure | | 3,05 | | | | | 2,99 |
| 0,24% Adipinsäure | 3,02 | | 3,13 | 2,49 | 2,57 | 2,63 | 2,93* |
| 0,4% Adipinsäure | | 2,97 | | | | | |
| 0,48% Adipinsäure | | | | | | | 2,7* |
| 0,8% Adipinsäure | | 2,69 | | | | | |

### Beispiel 6:

Ein kommerzielles hitzestabilisiertes Polyamid 6 mit 30 % Glasfasern für den Spritzguss (Durethan BKV 30 H2.0 der Firma Lanxess) wurde zusammen mit Additiv 2 in Granulatform gemischt und diese Mischung direkt im Spritzguss zu Fließspiralen verarbeitet. Die Ergebnisse wurden der direkten Verarbeitung des gleichen Polyamids ohne Additiv 2 gegenübergestellt. Hierbei betrugen die Massetemperatur 260°C, die Formtemperatur 90°C, und die Einspritzgeschwindigkeit 240 mm/s. Die Länge der Fließspirale wurde in cm gemessen, die relative Viskosität wurde am Material der Fließspirale bestimmt. Tabelle 10 fasst die Zusammensetzungen und gemessenen Werte zusammen.

**Tabelle 10:**

| | ***Polyamid 6 (Durethan BKV 30 H2.0)*** | ***Additiv 2*** | Spirallänge | Rel. Viskosität |
|---|---|---|---|---|
| | ***[Gew. %]*** | ***[Gew. %]*** | [cm] (%) | |
| R39 | 100 | | 40,20 (100,00) | 2,74 |
| R40 | 98,6 | 1,4 | 48,25 (120,02) | 2,52 |

Hier zeigt sich, dass auch beim direkten Einsatz des erfindungsgemäß einsetzbaren Additivs in Form einer Mischung des Additivs in Granulatform mit einem Polyamid-Granulat im Spritzguss die relative Viskosität gezielt abgebaut wird und die Fließfähigkeit (Länge der Fließspirale) signifikant verbessert wird. Trotz der geringen Mischzeiten bei der Spritzgussverarbeitung zeigt das erfindungsgemäß einsetzbare Additiv überraschend eine ausgezeichnete Eignung zur Modifikation der Fließeigenschaften des im Spritzguss zu verarbeitenden Materials. Die Spirallänge erhöht sich signifikant und die Viskosität sinkt, so dass auch bei der Spritzgussverarbeitung die bereits vorstehend diskutierten Vorteile der Erfindung voll zum Tragen kommen. Auch bei direktem Einsatz im Spritzguss können somit Zykluszeiten erhöht, Verarbeitungstemperaturen gesenkt und/oder dünnwandigere Teile sicher hergestellt werden. Alternativ kann auch ein Dry-Blend, d.h. eine Pulvermischung aus dem erfindungsgemäß einsetzbaren Additiv und dem Polyamid hergestellt und spritzgegossen werden.

### Beispiel 7:

Additiv 4 wurde auf einem Doppelschneckenextruder Leistritz ZSE 27 MAXX 48D bei 100 °C bis 180 °C (in einem entsprechenden Temperaturprofil) mit einem Durchsatz von 18kg/h hergestellt. Additiv 5 wurde ebenfalls mit dem genannten Extruder hergestellt, bei Temperaturen von 160°C bis 250°C und einem Durchsatz von 15 kg/h.

| Anteil [Gew.%] | Additiv 4 | Additiv 5 |
|---|---|---|
| Terephthalsäure | 12 | 12 |
| Ethylen-Methylacrylat-Copolymer | 88 | 69 |
| Polybutylenterephthalat | | 19 |

Additiv 2, Additiv 4 und Additiv 5 wurden mit dem teilaromatischen Polyamid Novadyn™ DT/DI der Firma INVISTA mit einer relativen Ausgangsviskosität von 1,96 und der Glasfaser ChopVantage® HP3610 von der Firma PPG Industries Fiber Glass in einem Doppelschneckenextruder Leistritz ZSE 27 MAXX 48D bei 280°C mit einem Durchsatz von 20 kg/h extrudiert.

Folgende Compounds wurden hergestellt:

**Tabelle 11:**

| | Novadyn™ DT/DI **[Gew.-%]** | **Glasfaser** ChopVantage® HP3610 **[Gew.-%]** | **Additiv 2 [Gew.-%]** | **Additiv 4 [Gew.-%]** | **Additiv 5 [Gew.-%]** |
|---|---|---|---|---|---|
| R41 | 70 | 30 | | | |
| R42 | 67,9 | 30 | 2,1 | | |
| R43 | 67,9 | 30 | | 2,1 | |
| R44 | 67,9 | 30 | | | 2,1 |

Es wurden Massedruck, Drehmoment des Extruders und die Viskosität der Compounds an den Prüfkörpern untersucht. Diese Ergebnisse sind in Tabelle 12 zusammen mit der Länge der Fließspirale gezeigt Weiterhin wurden die mechanischen Kennwerte bestimmt und in Tabelle 13 zusammengefasst.

**Tabelle 12:**

| | **Drehmoment [%]** | **Massedruck [bar]** | **Relative Viskosität** | **Spirallänge [cm] (%)** |
|---|---|---|---|---|
| R41 | 70 | 24 | 2,04 | 43,90 |
| R42 | 57 | 21 | 2,03 | 50,55 |
| R43 | 49 | 16 | 1,99 | 51,85 |
| R44 | 50 | 18 | 1,99 | 52,00 |

Mit dem eingesetzten teilaromatischen Polyamid kommt es aufgrund seiner niedrigen Ausgangsviskosität und seines niedrigen Wassergehaltes bei der Compoundierung zu einem Aufbau der Polymerketten durch Polykondensation, wie der Aufbau der Viskosität in Variante R41 zeigt. Es ist davon auszugehen, dass diese Reaktion in Konkurrenz steht zum gezielten Abbau durch die erfindungsgemäß einsetzbaren Additive.

Die nach der Compoundierung gemessenen relativen Viskositäten der Varianten R42, R43 und R44 resultieren aus der Kombination dieser gegenläufigen Effekte.

Weiterhin zeigt sich, dass bei Verwendung der aromatischen Terephthalsäure (Additive 4 und 5) ein stärkerer Einfluss auf die Viskositätseinstellung und eine bessere Fließfähigkeit (längere Fließspiralen) erhalten werden, als bei der Verwendung von Adipinsäure als Säurekomponente (Additiv 2), und dies obwohl die molare Säurekonzentration bei der Verwendung der Adipinsäure um 12% höher ist. Auch die Verarbeitbarkeit auf dem Extruder ist bei der Verwendung der Terephtalsäure verbessert.

Der zusätzliche Einsatz des reaktiven Polymers Polybutylenterphthalat in Additiv 5 hat praktisch keinen Einfluss auf die Performance des Additivs. Die Verarbeitungseigenschaften, die Länge der Fließspirale und die mechanischen Kennwerte liegen auf gleichem Niveau (wie ohne zusätzliches PBT).

Hier zeigt sich, dass durch den Einsatz von erfindungsgemäß einsetzbaren Additiven auch bei teilaromatischen Polyamiden eine gezielte Viskositätseinstellung und eine gezielte Einstellung der Fließfähigkeit möglich ist bei gleichzeitigem Erhalt der mechanischen Kennwerte.

**Tabelle 13**

| | ***Zugfestigkeit*** | ***Bruchdehnung*** | ***E-Modul*** | ***Kerbschlagzähigkeit*** |
|---|---|---|---|---|
| | ***[MPa]*** | ***[%]*** | ***[MPa]*** | ***kJ*/*m2*** |
| R41 | 217 | 6 | 10.300 | 9,44 |
| R42 | 215 | 6,2 | 10.200 | 9,17 |
| R43 | 213 | 6,1 | 10.100 | 9,10 |
| R44 | 210 | 6 | 10.400 | 8,61 |

### Beispiel 8

Additiv 2 wurde mit Polyamid 6 (Alphalon 32 der Firma Grupa Azoty) und Glasfasern sowie mit den in Tabelle 14 angegebenen zusätzlichen Additiven in einem Doppelschneckenextruder Leistritz ZSE 27 MAXX 48D bei 260°C mit einem Durchsatz von 20 kg/h extrudiert. Die relevanten Kenndaten wurden bestimmt und sind in Tabelle 14 zusammengefasst. Hier zeigt sich, dass das erfindungsgemäße Additiv in seiner Wirksamkeit durch die Anwesenheit weiterer Additive nicht beeinträchtigt wird. Tatsächlich zeigt sich überraschenderweise in bestimmten Kombinationen eine weitere Verbesserung der Produkteigenschaften des modifizierten Polyamids. Dies wird deutlich durch die in den Beispielen R46 bis R48 annähernd unveränderten Werte für die Spirallänge, während andere Eigenschaften gezielt verbessert werden können. So führt der Zusatz des Montansäureesters in R46 zu einer besseren Verarbeitbarkeit und zu einer höheren Kerbschlagzähigkeit. Die Zugabe von Calciummontanat in R47 erhöht die Werte für E-Modul und Glanz während der Zusatz eines Phthalamid-basierten Additivs in R48 keine weitere Verbesserung bringt. Diese Ergebnisse sind unerwartet, da die konventionellen Additive der Beispiele R46 und R47 als Gleitmittel bekannt sind aber nicht zur Erhöhung mechanischer Kennwerte. Diese unerwartete synergistische Wirkung mit dem erfindungsgemäß einsetzbaren Additiv zeigt, dass mit der vorliegenden Erfindung eine unerwartete aber gezielte Eigenschaftsmodifizierung bei Polyamiden möglich ist. Beispiel R48 zeigt, dass das erfindungsgemäß einsetzbare System auch beim gleichzeitigen Einsatz eines weiteren zusätzlichen Additivs (das insbesondere bei der Faserherstellung weit verbreitet ist) die gewünschte Aktivität zeigt.

Besonders bevorzugt ist der gleichzeitige Einsatz des erfindungsgemäß einsetzbaren Additivs zusammen mit einem mehrwertigen Alkohol (in den Beispielen R49 bis R51). Überraschenderweise wird hierdurch die Fließfähigkeit nochmals verbessert unter Erhalt des mechanischen Eigenschaftsprofils, ohne dass die relative Viskosität durch den zusätzlichen mehrwertigen Alkohol weiter abgesenkt wird. Mehrwertige Alkohole wie Dipentarythritol werden bislang vor allem als Zusatz in Flammschutzmitteln und zur Stabilisierung von verstärkten Polyamiden bei hohen Einsatztemperaturen eingesetzt.

Selbst bei einer hohen Einsatzmenge des mehrwertigen Alkohols von 3% in Beispiel R51 wird die relative Viskosität des erfindungsgemäß modifizierten Polyamids nur unwesentlich abgesenkt und die mechanischen Daten bleiben erhalten, während die Fließfähigkeit weiter signifikant erhöht wird. So können durch den Einsatz eines erfindungsgemäß einsetzbaren Additivs auch hochtemperaturstabilisierte Polyamide erhalten werden, die gleichzeitig eine sehr gute Verarbeitbarkeit und eine hohe Fließfähigkeit aufweisen.

**Tabelle : 14**

| | ***Polyamid 6*** | ***Additiv 2*** | **Glasfaser** ChopVantage® HP3610 | ***Zusätzliches Additiv*** | ***Relative Viskosität*** | ***Spirallänge*** | ***Drehmoment Extruder*** | ***Kerb-schlagzähigkeit*** | ***E-Modul*** | ***Glanz*** |
|---|---|---|---|---|---|---|---|---|---|---|
| | ***[Gew. %]*** | ***[Gew. %]*** | ***[Gew.-%]*** | ***[Gew. %]*** | ***Compound*** | ***[cm]*** | ***[%]*** | ***[kJ*/*m²]*** | ***[MPa]*** | ***[60°]*** |
| R45 | 68,60 | 1,4 | 30 | - | 2,59 | 47,70 | 55 | 14,01 | 9550 | 85,7 |
| R46 | 67,90 | 1,4 | 30 | 0,70 % Montansäureester mit multifunktionellen Alkoholen | 2,61 | 47,55 | 50 | 18,86 | 9590 | 86,2 |
| R47 | 68,25 | 1,4 | 30 | 0,35 % Calcium-montanat | 2,64 | 46,45 | 52 | 14,09 | 9770 | 88,5 |
| R48 | 68,25 | 1,4 | 30 | 0,35% N,N'-Bis(2,2,6,6-tetra methyl-4-piperidyl)isophthalamid | 2,61 | 47,65 | 55 | 13,91 | 9610 | 83,7 |
| R49 | 68,25 | 1,4 | 30 | 0,35% Dipentaerythritol | 2,59 | 48,00 | 54 | 13,20 | 9620 | 84,9 |
| | | | | (2,2-Bis(hydroxymethyl)pro-pane-1,3-diol) | | | | | | |
| R50 | 67,90 | 1,4 | 30 | 0,70 % Dipentaerythritol (2,2-Bis(hydroxymethyl)pro-pane-1,3-diol) | 2,60 | 48,15 | 53 | 13,97 | 9670 | 86,1 |
| R51 | 65,60 | 1,4 | 30 | 3,00% Dipentaerythritol (2,2-Bis(hydroxymethyl)pro-pane-1,3-diol) | 2,56 | 50,60 | 50 | - | 9680 | - |

### Beispiel 9

Zur Überprüfung der Stabilität von erfindungsgemäß modifizierten Polyamiden wurden Wärmealterungsversuche durchgeführt.

Ein Polyamid 6.6 (Ultramid® A27 E der Firma BASF) wurde mit zwei unterschiedlichen Hitzestabilisatoren jeweils mit und ohne Additiv 2 in einem Doppelschneckenextruder Leistritz (ZSE27MAXX - 48D) compoundiert mit einem Durchsatz von 15 kg/h und zu Zugprüfkörpern spritzgegossen. Nach Wärmealterung wurde die Zeit bis zur Retention von 50% der Anfangsfestigkeit bestimmt. Die Werte sind in den Tabellen 15 und 16 dargestellt.

**Tabelle 15: Stabilisierung von erfindungsgemäß modifiziertem Polyamid 6.6 mit einer Kombination aus einem gehinderten phenolischen Antioxidans und einem Phosphit; Wärmealterung bei 130°C**

| | | |
|---|---|---|
| Polyamid 6.6 natur wurde einmal mit und einmal ohne (Vergleichsvariante) **Additiv 2** verarbeitet, wobei beide Varianten mit der Kombination aus einem gehinderten phenolischen Antioxidans (AO-7) und einem Phosphit (PS-2) stabilisiert wurden. | | |
| Primäres phenolisches Antioxidans AO-7, CAS Nr. 23128-74-7, N,N'-Hexan-1,6-diylbis[3-(3,5-di-tert.-butyl-4-hydroxyphenyl)propionamid]; | | |
| Sekundäres phosphitisches Antioxidant PS-2, CAS Nr. 31570-04-4, Tris(2,4-ditert-butyl-phenyl)phosphit; | | |
| Die Wärmealterung erfolgte bei 130°C. | | |

| Typ | Zusammensetzung | Zeit bis Retention von 50% der Anfangszugfestigkeit |
|---|---|---|
| Erfindungsgemäß | Polyamid 6.6 modifiziert mit 3% Additiv 2 und mit 0,25% AO-7 / 0,25% PS-2 | 1.900 h |
| Vergleich | Polyamid 6.6 mit 0,25% AO-7 / 0,25% PS-2 | 1.800 h |

**Tabelle 16: Stabilisierung von modifiziertem Polyamid 6.6 mit einer Kombination aus Kupferiodid und Kaliumbromid; Wärmealterung bei 180°C**

| | | |
|---|---|---|
| Polyamid 6.6 wurde einmal mit und einmal ohne (Vergleichsvariante) Additiv 2 verarbeitet, wobei beide Varianten mit der Kombination aus Kupferiodid und Kaliumbromid stabilisiert wurden. Die Wärmealterung erfolgte bei 180°C. | | |

| Typ | Zusammensetzung | Zeit bis Retention von 50% der Anfangszugfestigkeit |
|---|---|---|
| Erfindungsgemäß | Polyamid 6.6 modifiziert mit 3% Additiv 2 und mit 0,03% Cul und 0,14% KBr | 480 h |
| Vergleich | Polyamid 6.6 mit 0,03% Cul und 0,14% KBr | 500 h |

In den Tabellen 15 und 16 ist zu erkennen dass die Viskositätseinstellung mit Additiv 2 nicht zu einer Verringerung der Stabilität des Polyamids führt. Unabhängig von der Art des verwendeten Hitzestabilisators konnte kein Einfluss auf den Erhalt der Zugfestigkeit nach Wärmealterung und damit auf die Wirksamkeit des jeweiligen Stabilisators gefunden werden. Weder bei der Verwendung einer Kombination aus einem gehinderten phenolischen Antioxidans und einem Phosphit noch bei der Verwendung eines Kupfersalzes zusammen mit einem Alkalihalogenid (klassische Kupfer-basierte Stabilisierung) ändert sich die Zeit bis zur Retention von 50% der Anfangszugfestigkeit maßgeblich durch die erfindungsgemäße Viskositätseinstellung. Dies ist insbesondere bemerkenswert, da in diesen Versuchen relativ große Mengen an Additiv in Übereinstimmung mit der vorliegenden Erfindung eingesetzt wurden. Dies zeigt, dass das erfindungsgemäße System keinen nachteiligen Effekt auf andere funktionelle Komponenten, wie Hitzestabilisatoren, ausübt.

### Beispiel 10:

Ein kommerzielles teilaromatisches Polyamid, PA6T/6I/66 mit 50 % Glasfasergehalt für den Spritzguss, wurde jeweils zusammen mit Additiv 2 und mit Additiv 4 in Granulatform gemischt und diese Mischungen direkt im Spritzguss zu Fließspiralen, Schlagprüfkörpern und Zugprüfkörpern verarbeitet. Die Ergebnisse wurden der direkten Verarbeitung des gleichen Polyamids ohne Additiv gegenübergestellt. Die Massetemperatur betrug 290°C, die Formtemperatur 90°C und die Einspritzgeschwindigkeit war 240 mm/s. Die Länge der Fließspirale wurde in cm gemessen und die relative Viskosität wurde am Material der Fließspirale bestimmt. Tabelle 17 fasst die Zusammensetzungen und Tabelle 18 die gemessenen Werte zusammen.

**Tabelle 17:**

| | PA6T/6I/66 mit 50 % Glasfasergehalt | ***Additiv 2*** | ***Additiv 4*** |
|---|---|---|---|
| | ***[Gew. %]*** | ***[Gew. %]*** | ***[Gew. %]*** |
| R52 | 100 | | |
| R53 | 98,5 | 1,5 | |
| R54 | 98,5 | | 1,5 |

**Tabelle 18:**

| | Rel. Viskosität | Spirallänge | ***Zugfestigkeit*** | ***Bruchdehnung*** | ***E-Modul*** | ***Kerbschlagzähigkeit*** |
|---|---|---|---|---|---|---|
| | | [cm] (%) | ***[MPa]*** | ***[%]*** | ***[MPa]*** | ***kJ*/*m2*** |
| R52 | 2,75 | 44,50 (100,00) | 252,2 | 3,1 | 16.197 | 17,00 |
| R53 | 2,72 | 46,42 (104,31) | 234,7 | 2,8 | 15.372 | 15,94 |
| R54 | 2,68 | 53,95 (121,23) | 226,2 | 2,8 | 14.735 | 16,14 |

Mit beiden erfindungsgemäß einsetzbaren Additiven konnte somit auch bei der Verwendung als Granulatmischung mit dem zu modifizierenden Polyamid im direkten Spritzguss eine gezielte Einstellung der Viskosität und eine signifikante Verbesserung der Fließfähigkeit (Länge der Fließspirale) erreicht werden. Es zeigt sich hier, dass bei Einsatz des erfindungsgemäß einsetzbaren Additivs 4 mit einer aromatischen Dicarbonsäure (hier Terephthalsäure) deutlich bessere Resultate erzielt werden als bei Verwendung des erfindungsgemäß einsetzbaren Additivs 2 auf Basis einer aliphatischen Dicarbonsäure (hier Adipinsäure). Das sehr gute mechanische Eigenschaftsprofil des hochgefüllten teilaromatischen Polyamids bleibt dabei annähernd erhalten.

### Beispiel 11:

Additiv 4 und Additiv 5 wurden zusammen mit dem Nukleierungsmittel Brüggolen P252 der Firma Brüggemann und mit dem kommerziellen Polyethylenterephthalat PET 4048 der Firma INVISTA und mit der Glasfaser ChopVantage® HP3786 von der Firma PPG Industries Fiber Glass in einem Doppelschneckenextruder Leistritz ZSE 27 MAXX 48D bei 280°C mit einem Durchsatz von 20 kg/h compoundiert und im Anschluss zu Zugprüfkörpern und Schlagzugkörpern spritzgegossen.

Tabelle 19 fasst die Zusammensetzungen und Tabelle 20 die gemessenen mechanischen Werte zusammen. Die Länge der Fließspirale wurde in cm gemessen und die intrinsische Viskosität wurde am Compound gemessen.

**Tabelle 19:**

| | **PET [Gew.-%]** | **Additiv 4 [Gew.-%]** | **Additiv 5 [Gew.-%]** | **Glasfaser [Gew.-%]** | **Nukleierungsmittel [Gew.-%]** |
|---|---|---|---|---|---|
| R55 | 69,5 | | | 30 | 0,5 |
| R56 | 68,8 | 0,70 | | 30 | 0,5 |
| R57 | 68,45 | 1,05 | | 30 | 0,5 |
| R58 | 68,8 | | 0,70 | 30 | 0,5 |
| R59 | 68,45 | | 1,05 | 30 | 0,5 |

**Tabelle 20:**

| | Intrinsische Viskosität | Spirallänge | ***Zugfestigkeit*** | ***Bruchdehnung*** | ***E-Modul*** | ***Kerbschlagzähigkeit*** |
|---|---|---|---|---|---|---|
| | | [cm] (%) | ***[MPa]*** | ***[%]*** | ***[MPa]*** | ***kJ*/*m2*** |
| R55 | 0,598 | 48,45 (100,00) | 157 | 4,6 | 10.300 | 11,73 |
| R56 | 0,560 | 53,80 (110,42) | 177 | 4,7 | 11.100 | 10,12 |
| R57 | 0,543 | 55,05 (113,62) | 178 | 4,6 | 11.200 | 10,27 |
| R58 | 0,559 | 54,25 (111,97) | 177 | 4,7 | 11.000 | 9,97 |
| R59 | 0,545 | 55,20 (113,93) | 178 | 4,6 | 11.100 | 10,46 |

Mit beiden erfindungsgemäß einsetzbaren Additiven 4 und 5 konnte somit überraschenderweise auch bei Polyethylenterephthalat (PET) eine gezielte Linstellung der Viskosität und eine signifikante Verbesserung der Fließfähigkeit (Länge der Fließspirale) erreicht werden ohne dass die mechanischen Kennwerte abfallen. Der zusätzliche Einsatz des reaktiven Polymers Polybutylenterephthalat bei der Herstellung von Additiv 5 hat keinen Einfluss auf die Performance von Additiv 5 in PET. Die Länge der Fließspirale und die mechanischen Kennwerte bleiben auf gleichem Niveau. Diese Beispiele verdeutlichen, dass der insbesondere für Polyamide experimentell nachgewiesene Effekt der vorliegenden Erfindung auch auf andere Polykondensate, insbesondere Polyester übertragbar ist.

## Patentansprüche

1. Verwendung eines Additivs zur kontrollierten niedrigeren Viskositätseinstellung von Polymeren, die mit Säure spaltbare Einheiten aufweisen, insbesondere von Polykondensaten, wie Polyamiden, Polyestern, Polycarbonaten und Polyethern sowie deren Copolymeren, wobei das Additiv umfasst:
- eine Säure und/oder Säureanhydrid oder Gemische daraus und
- einen Träger,
**dadurch gekennzeichnet, dass** die Säure und/oder das Säureanhydrid oder Gemische daraus im Träger gleichmäßig verteilt sind und der Träger nicht mit der Säure oder dem Säureanhydrid reagiert.

2. Verwendung nach Anspruch 1, **dadurch gekennzeichnet, dass** die Säure und/oder das Säureanhydrid eine Carbonsäure bzw. Carbonsäureanhydrid ist.

3. Verwendung nach Anspruch 2, **dadurch gekennzeichnet, dass** die Carbonsäure eine mehrfunktionelle Carbonsäure ist.

4. Verwendung nach Anspruch 3, **dadurch gekennzeichnet, dass** die mehrfunktionelle Carbonsäure eine bifunktionelle Carbonsäure ist.

5. Verwendung nach einem der Ansprüche 1 bis 4, **dadurch gekennzeichnet, dass** die Säure ausgewählt ist aus der Gruppe bestehend aus Adipinsäure, Pimelinsäure, Korksäure, Azelainsäure, Sebacinsäure, Undecandicarbonsäure, Dodecandicarbonsäure, Oxalsäure, Malonsäure, Bernsteinsäure, Glutarsäure, Oxalessigsäure, Phthalsäure, Terephthalsäure, Isophthalsäure, 2-(100xo-10H-9-oxa-10-phosphaphenantren-10-ylme-thyl)bernsteinsäure oder Gemischen daraus, besonders bevorzugt Adipinsäure, Sebacinsäure und Terephthalsäure.

6. Verwendung nach einem der Ansprüche 1 oder 2, **dadurch gekennzeichnet, dass** das Säureanhydrid ausgewählt ist aus Trimellitsäureanhydrid, Succinsäureanhydrid, Phthalsäureanhydrid oder Gemischen daraus.

7. Verwendung nach einem der Ansprüche 1 oder 2, **dadurch gekennzeichnet, dass** die Säure ein säureterminiertes Polymer oder Oligomer ist, vorzugsweise ausgewählt unter Polyamiden, Oligoamiden und Polyestern und Mischungen daraus, insbesondere säureterminierte oligomere Amide und säureterminiertes Polyamid 6, Polyamid 6.6, sowie PBT und PET und Mischungen aus den genannten Polymeren oder Mischungen aus den genannten Polymeren und den genannten Oligomeren.

8. Verwendung nach einem der Ansprüche 1 bis 7, **dadurch gekennzeichnet, dass** der Träger ein polymerer Träger ist, vorzugsweise ausgewählt aus einem Polymer oder Copolymer aus den Monomeren Ethylen, Polypropylen oder andere Olefine, Methacrylsäure, Vinylacetat, Acrylsäure, Acrylsäureester, oder Methacrylsäureester, besonders bevorzugt ein Olefin-Acrylsäureester-Copolymer oder ein Olefin-Methacrylsäureester-Copolymer, insbesondere ein Ethylen-Methylacrylat-Copolymer (EMA), ein Ethylen-Ethylacrylat-Copolymer (EEA) oder ein Ethylen-Butylacrylat-Copolymer (EBA).

9. Verwendung nach einem der Ansprüche 1 bis 8, **dadurch gekennzeichnet, dass** die Säure und/oder das Säureanhydrid in einer Menge von 1 bis 50 Gew.-%, bevorzugt 5 bis 33 Gew.-%, insbesondere 8 bis 30 Gew.-% enthalten ist, bezogen auf die Gesamtmenge des Additivs.

10. Verwendung nach einem der Ansprüche 1 bis 9, wobei das Additiv weiter umfasst mindestens einen Zuschlagstoff ausgewählt aus der Gruppe bestehend aus Antioxidantien, Nukleierungsmitteln, Stabilisatoren, Schmiermitteln, Formentrennmitteln, Gleitfähigkeitsverbesserer, Füllstoffen, Färbemitteln, Flammverzögerern und -schutzmitteln, Weichmachern, Schlagzähmodifikatoren, Antistatika, Verarbeitungshilfsmitteln, und mehrwertigen Alkoholen sowie deren Ether- oder Esterderivate oder Gemischen daraus.

11. Verwendung nach einem der vorstehenden Ansprüche, wobei das Additiv weiter umfasst ein mit der Säure und/oder dem Säureanhydrid reaktives polymeres Material, insbesondere ein Polyamid, wie Polyamid 6 und Polyamid 6.6 sowie deren Mischungen, und/oder ein Polyester, wie PET und PBT, sowie deren Mischungen, oder Mischungen aus Polyamiden und Polyestern, und/oder wobei der Anteil an reaktivem polymerem Material, bezogen auf die Gesamtzusammensetzung des Additivs 50 Gew.-% oder weniger und ist und bevorzugt nicht höher als der Anteil an nichtreaktivem Träger.

12. Additiv zur kontrollierten niedrigeren Viskositätseinstellung von Polymeren, die mit Säure spaltbare Einheiten aufweisen, insbesondere von Polykondensaten, wie Polyamiden, Polyestern, Polycarbonaten und Polyethern sowie deren Copolymeren, wobei das Additiv umfasst:
- eine Säure und/oder Säureanhydrid oder Gemische daraus und
- einen Träger,
**dadurch gekennzeichnet, dass** die Säure und/oder das Säureanhydrid oder Gemische daraus im Träger gleichmäßig verteilt sind und der Träger nicht mit der Säure oder dem Säureanhydrid reagiert, wobei das Additiv weiter umfasst ein mit der Säure und/oder dem Säureanhydrid reaktives polymeres Material, nämlich ein Polyamid, wie Polyamid 6 und Polyamid 6.6 sowie deren Mischungen, oder Mischungen aus Polyamiden und Polyestern, und/oder wobei der Anteil an reaktivem polymerem Material, bezogen auf die Gesamtzusammensetzung des Additivs 50 Gew.-% oder weniger und ist und bevorzugt nicht höher als der Anteil an nichtreaktivem Träger.

13. Verfahren zur kontrollierten niedrigeren Viskositätseinstellung von Polymeren, die mit Säure spaltbare Einheiten aufweisen, insbesondere von Polykondensaten, wie Polyamiden, Polyestern, Polycarbonaten und Polyethern sowie deren Copolymeren, umfassend das Mischen des Additivs, wie in einem der Ansprüche 1 bis 11 beschrieben oder in Anspruch 12 definiert, mit dem betreffenden Polymer in der Schmelze bzw. das gemeinsame Aufschmelzen einer Mischung des Additivs und des betreffenden Polymers.

14. Verfahren nach Anspruch 13 oder Verwendung nach einem der Ansprüche 1 bis 11, **dadurch gekennzeichnet, dass** das Polymer ein Polyamid, ausgewählt aus verstärkten oder unverstärkten aliphatischen Polyamiden wie z.B. PA 6, PA 6.6, PA 4.6, PA 11, PA 12 oder aus entsprechenden Copolyamiden oder aus Gemischen verschiedener Polyamide oder Copolyamide ist, oder ein unverstärkter oder verstärkter aliphatischer Polyester.

15. Verfahren nach Anspruch 13 oder Verwendung nach einem der Ansprüche 1 bis 11 oder 14, **dadurch gekennzeichnet, dass** das Polymer ein Polyamid, ausgewählt aus verstärkten oder unverstärkten teilaromatischen Polyamiden bei denen sich die Monomere zum Teil von aromatischen Grundkörpern ableiten oder aus entsprechenden Copolyamiden oder aus Gemischen von teilaromatischen Polyamiden bzw. Copolyamiden miteinander und / oder mit aliphatischen Polyamiden bzw. Copolyamiden ist, oder ein unverstärkter oder verstärkter aromatischer oder teilaromatischer Polyester, vorzugsweise PET oder PBT.

16. Verfahren nach einem der Ansprüche 13, 14 oder 15 oder Verwendung nach einem der Ansprüche 1 bis 11, 14 oder 15, wobei das Additiv bei der Spritzgussverarbeitung von Polyamiden zum Einsatz kommt.

## Claims

1. Use of an additive for the controlled reducing adjustment of the viscosity of polymers containing units which can be cleaved with acids, in particular polycondensates such as polyamides, polyesters, polycarbonates and polyethers, as well as copolymers thereof, wherein the additive comprises:
- an acid and/or acid anhydride or mixtures thereof, and
- a carrier,
**characterized in that** the acid and/or the acid anhydride or mixtures thereof are uniformly distributed in the carrier and the carrier does not react with the acid or the acid anhydride.

2. Use as claimed in claim 1, **characterized in that** the acid and/or the acid anhydride is a carboxylic acid or carboxylic anhydride.

3. Use as claimed in claim 2, **characterized in that** the carboxylic acid is a polyfunctional carboxylic acid.

4. Use as claimed in claim 3, **characterized in that** the polyfunctional carboxylic acid is a bifunctional carboxylic acid.

5. Use as claimed in one of claims 1 to 4, **characterized in that** the acid is selected from the group consisting of adipic acid, pimelic acid, suberic acid, azelaic acid, sebacic acid, undecanedioic acid, dodecanedioic acid, oxalic acid, malonic acid, succinic acid, glutaric acid, oxaloacetic acid, phthalic acid, terephthalic acid, isophthalic acid, 2-(10-oxo-10H-9-oxa-10-phosphaphenantren-10-ylmethyl)succinic acid or mixtures thereof, particularly preferably adipic acid, sebacic acid and terephthalic acid.

6. Use as claimed in claim 1 or claim 2, **characterized in that** the acid anhydride is selected from trimellitic acid anhydride, succinic acid anhydride, phthalic acid anhydride or mixtures thereof.

7. Use as claimed in claim 1 or claim 2, **characterized in that** the acid is an acid-terminated polymer or oligomer, preferably selected from polyamides, oligoamides and polyesters and mixtures thereof, in particular acid-terminated oligomeric amides and acid-terminated polyamide 6, polyamide 6.6, as well as PBT and PET and mixtures of said polymers or mixtures of said polymers and said oligomers.

8. Use as claimed in one of claims 1 to 7, **characterized in that** the carrier is a polymeric carrier, preferably selected from a polymer or copolymer of the monomers ethylene, polypropylene or other olefins, methacrylic acid, vinyl acetate, acrylic acid, acrylic acid ester or methacrylic acid ester, particularly preferably an olefin-acrylic acid ester copolymer or an olefin-methacrylic acid ester copolymer, in particular an ethylene-methyl acrylate copolymer (EMA), an ethylene-ethyl acrylate copolymer (EEA) or an ethylene-butyl acrylate copolymer (EBA).

9. Use as claimed in one of claims 1 to 8, **characterized in that** the acid and/or the acid anhydride is present in a quantity of 1% to 50% by weight, preferably 5% to 33% by weight, in particular 8% to 30% by weight, with respect to the total quantity of the additive.

10. Use as claimed in one of claims 1 to 9, wherein the additive further comprises at least one supplement selected from the group consisting of antioxidants, nucleating agents, stabilizers, lubricants, mould release agents, slip additives, fillers, colorants, flame retardants and fire resistant agents, plasticizers, impact modifiers, antistatic agents, processing aids and polyhydric alcohols, as well as their ether or ester derivatives or mixtures thereof.

11. Use as claimed in one of the preceding claims, wherein the additive further comprises a polymeric material which can react with the acid and/or the acid anhydride, in particular a polyamide such as polyamide 6 and polyamide 6.6, and mixtures thereof, and/or a polyester such as PET and PBT, and mixtures thereof, or mixtures of polyamides and polyesters, and/or wherein the proportion of reactive polymeric material, with respect to the total composition of the additive, is 50% by weight or less and preferably not higher than the proportion of non-reactive carrier.

12. An additive for the controlled reducing adjustment of the viscosity of polymers containing units which can be cleaved with acids, in particular polycondensates such as polyamides, polyesters, polycarbonates and polyethers, as well as copolymers thereof, wherein the additive comprises:
- an acid and/or acid anhydride or mixtures thereof, and
- a carrier,
**characterized in that** the acid and/or the acid anhydride or mixtures thereof are uniformly distributed in the carrier and the carrier does not react with the acid or the acid anhydride, wherein the additive further comprises a polymeric material which can react with the acid and/or the acid anhydride, namely a polyamide such as polyamide 6 and polyamide 6.6, and mixtures thereof, or mixtures of polyamides and polyesters, and/or wherein the proportion of reactive polymeric material, with respect to the total composition of the additive, is 50% by weight or less and preferably not higher than the proportion of non-reactive carrier.

13. A process for the controlled reducing adjustment of the viscosity of polymers containing units which can be cleaved with acids, in particular polycondensates such as polyamides, polyesters, polycarbonates and polyethers as well as copolymers thereof, comprising mixing the additive as described in one of claims 1 to 11 or defined in claim 12 with the polymer in question in the melt, or melting together a mixture of the additive and the polymer in question.

14. The process as claimed in claim 13 or use as claimed in one of claims 1 to 11, **characterized in that** the polymer is a polyamide selected from reinforced or unreinforced aliphatic polyamides such as PA 6, PA 6.6, PA 4.6, PA 11, PA 12, for example, or from corresponding copolyamides or from blends of different polyamides or copolyamides, or an unreinforced or reinforced aliphatic polyester.

15. The process as claimed in claim 13 or use as claimed in one of claims 1 to 11 or 14, **characterized in that** the polymer is a polyamide selected from reinforced or unreinforced partially aromatic polyamides in which the monomers are partly derived from aromatic basic bodies or from corresponding copolyamides or from mixtures of partially aromatic polyamides or copolyamides with one another and/or with aliphatic polyamides or copolyamides, or an unreinforced or reinforced aromatic or partially aromatic polyester, preferably PET or PBT.

16. The process as claimed in one of claims 13, 14 or 15, or use as claimed in one of claims 1 to 11, 14 or 15, wherein the additive is used in the injection moulding of polyamides.

## Revendications

1. Utilisation d'un additif permettant d'ajuster à la baisse de manière contrôlée la viscosité de polymères présentant des unités clivables par un acide, en particulier de polycondensats, tels que des polyamides, des polyesters, des polycarbonates et des polyéthers, ainsi que des copolymères de ceux-ci, dans laquelle l'additif comprend :
- un acide et/ou un anhydride d'acide ou des mélanges de ceux-ci, et
- un support,
**caractérisée en ce que** l'acide et/ou l'anhydride d'acide ou les mélanges de ceux-ci sont répartis de manière homogène dans le support et le support ne réagit pas avec l'acide ou l'anhydride d'acide.

2. Utilisation selon la revendication 1, **caractérisée en ce que** l'acide et/ou l'anhydride d'acide est un acide carboxylique ou un anhydride d'acide carboxylique.

3. Utilisation selon la revendication 2, **caractérisée en ce que** l'acide carboxylique est un acide carboxylique polyfonctionnel.

4. Utilisation selon la revendication 3, **caractérisée en ce que** l'acide carboxylique polyfonctionnel est un acide carboxylique bifonctionnel.

5. Utilisation selon l'une quelconque des revendications 1 à 4, **caractérisée en ce que** l'acide est choisi dans le groupe constitué par l'acide adipique, l'acide pimélique, l'acide subérique, l'acide azélaïque, l'acide sébacique, l'acide undécanedicarboxylique, l'acide dodécanedicarboxylique, l'acide oxalique, l'acide malonique, l'acide succinique, l'acide glutarique, l'acide oxalacétique, l'acide phtalique, l'acide téréphtalique, l'acide isophtalique, l'acide 2-(10oxo-10H-9-oxa-10-phosphaphénantrène-10-ylméthyl)succinique ou des mélanges de ceux-ci, de manière particulièrement préférée l'acide adipique, l'acide sébacique et l'acide téréphtalique.

6. Utilisation selon la revendication 1 ou 2, **caractérisée en ce que** l'anhydride d'acide est choisi parmi l'anhydride trimellitique, l'anhydride succinique, l'anhydride phtalique ou des mélanges de ceux-ci.

7. Utilisation selon la revendication 1 ou 2, **caractérisée en ce que** l'acide est un polymère ou oligomère à terminaison acide, de manière préférée choisi parmi les polyamides, les oligoamides et les polyesters et des mélanges de ceux-ci, en particulier les amides oligomères à terminaison acide et le polyamide 6 à terminaison acide 6, le polyamide 6.6, et le PBT et le PET, et des mélanges issus desdits polymères ou des mélanges issus desdits polymères et desdits oligomères.

8. Utilisation selon l'une quelconque des revendications 1 à 7, **caractérisée en ce que** le support est un support polymère, de manière préférée choisi parmi un polymère ou copolymère issu des monomères éthylène, polypropylène ou autres oléfines, acide méthacrylique, acétate de vinyle, acide acrylique, esters acryliques ou esters méthacryliques, de manière particulièrement préférée un copolymère oléfine-ester acrylique ou un copolymère oléfine-ester méthacrylique, en particulier un copolymère éthylène-acrylate de méthyle (EMA), un copolymère éthylène-acrylate d'éthyle (EEA) ou un copolymère éthylène-acrylate de butyle (EBA).

9. Utilisation selon l'une quelconque des revendications 1 à 8, **caractérisée en ce que** l'acide et/ou l'anhydride d'acide sont présents en une quantité comprise entre 1 et 50 % en poids, de manière préférée comprise entre 5 et 33 % en poids, en particulier comprise entre 8 et 30 % en poids, par rapport à la quantité totale de l'additif.

10. Utilisation selon l'une quelconque des revendications 1 à 9, dans laquelle l'additif comprend en outre au moins un additif choisi dans le groupe constitué par les antioxydants, les agents de nucléation, les stabilisants, les lubrifiants, les agents de démoulage, les agents améliorant la lubrification, les charges, les colorants, les retardateurs de flamme et les produits ignifuges, les plastifiants, les modificateurs de résilience, les agents antistatiques, les auxiliaires de traitement et les alcools polyvalents, et leurs dérivés éther ou ester ou des mélanges de ceux-ci.

11. Utilisation selon l'une quelconque des revendications précédentes, dans laquelle l'additif comprend en outre un matériau polymère réactif avec l'acide et/ou l'anhydride d'acide, en particulier un polyamide, tel que le polyamide 6 et le polyamide 6.6, et des mélanges de ceux-ci, et/ou un polyester, tel que le PET et le PBT, et des mélanges de ceux-ci, ou des mélanges de polyamides et de polyesters, et/ou dans laquelle la proportion de matériau polymère réactif par rapport à la composition totale de l'additif est inférieure ou égale à 50 % en poids et n'est de manière préférée pas supérieure à la proportion de support non réactif.

12. Additif permettant d'ajuster à la baisse de manière contrôlée la viscosité de polymères présentant des unités clivables par un acide, en particulier de polycondensats tels que des polyamides, des polyesters, des polycarbonates et des polyéthers, et des copolymères de ceux-ci, dans lequel ledit additif comprend :
- un acide et/ou un anhydride d'acide ou des mélanges de ceux-ci, et
- un support,
**caractérisé en ce que** l'acide et/ou l'anhydride d'acide ou les mélanges de ceux-ci sont répartis de manière homogène dans le support et le support ne réagit pas avec l'acide ou l'anhydride d'acide, dans lequel l'additif comprend en outre un matériau polymère réactif avec l'acide et/ou l'anhydride d'acide, à savoir un polyamide, tel que le polyamide 6 et le polyamide 6.6 et des mélanges de ceux-ci, ou des mélanges de polyamides et de polyesters, et/ou dans lequel la proportion de matériau polymère réactif par rapport à la composition totale de l'additif est inférieure ou égale à 50 % en poids et n'est de manière préférée pas supérieure à la proportion de support non réactif.

13. Procédé permettant d'ajuster à la baisse de manière contrôlée la viscosité de polymères présentant des unités clivables par un acide, en particulier de polycondensats, tels que des polyamides, des polyesters, des polycarbonates et des polyéthers, et des copolymères de ceux-ci, comprenant une étape de mélange de l'additif, de la manière décrite dans l'une quelconque des revendications 1 à 11 ou de la manière définie dans la revendication 12, avec le polymère en question au sein d'une masse fondue, ou une étape de fusion en commun d'un mélange constitué de l'additif et du polymère en question.

14. Procédé selon la revendication 13 ou utilisation selon l'une quelconque des revendications 1 à 11, **caractérisé en ce que** le polymère est un polyamide choisi parmi des polyamides aliphatiques renforcés ou non renforcés tels que par exemple PA 6, PA 6.6, PA 4.6, PA 11, PA 12 ou parmi des copolyamides correspondants ou parmi des mélanges de différents polyamides ou copolyamides, ou un polyester aliphatique non renforcé ou renforcé.

15. Procédé selon la revendication 13 ou utilisation selon l'une quelconque des revendications 1 à 11 ou 14, **caractérisé en ce que** le polymère est un polyamide choisi parmi des polyamides partiellement aromatiques renforcés ou non renforcés au sein desquels les monomères dérivent pour partie de corps de base aromatiques, ou parmi des copolyamides correspondants ou parmi des mélanges de polyamides ou copolyamides partiellement aromatiques, entre eux et/ou avec des polyamides ou copolyamides aliphatiques, ou un polyester aromatique ou partiellement aromatique non renforcé ou renforcé, de manière préférée du PET ou du PBT.

16. Procédé selon l'une quelconque des revendications 13, 14 ou 15 ou utilisation selon l'une quelconque des revendications 1 à 11, 14 ou 15, dans lequel l'additif est utilisé lors du traitement de polyamides par moulage par injection.
